(19)

Europäisches
Patentamt
European
Patent Office
Office européen
des brevets

(11) **EP 4 712 647 A1**

(12) **EUROPEAN PATENT APPLICATION**
published in accordance with Art. 153(4) EPC

(43) Date of publication:
**18.03.2026 Bulletin 2026/12**

(21) Application number: **24757325.6**

(22) Date of filing: **16.02.2024**

(51) International Patent Classification (IPC):
$H04W\ 72/21^{(2023.01)}$     $H04W\ 72/04^{(2023.01)}$
$H04W\ 72/541^{(2023.01)}$     $H04W\ 48/10^{(2009.01)}$
$H04W\ 48/12^{(2009.01)}$     $H04L\ 5/00^{(2006.01)}$

(52) Cooperative Patent Classification (CPC):
**H04L 5/00; H04W 48/10; H04W 48/12;
H04W 72/04; H04W 72/21; H04W 72/541**

(86) International application number:
**PCT/KR2024/095322**

(87) International publication number:
**WO 2024/172608 (22.08.2024 Gazette 2024/34)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **16.02.2023 KR 20230021052
10.08.2023 US 202363532061 P**

(71) Applicant: **LG Electronics Inc.
Yeongdeungpo-gu
Seoul 07336 (KR)**

(72) Inventors:
• **KIM, Jaehyung**
  **Seoul 06772 (KR)**
• **YANG, Suckchel**
  **Seoul 06772 (KR)**
• **AHN, Seungjin**
  **Seoul 06772 (KR)**
• **KIM, Seonwook**
  **Seoul 06772 (KR)**
• **LEE, Sunghoon**
  **Seoul 06772 (KR)**

(74) Representative: **Plasseraud IP
104 Rue de Richelieu
CS92104
75080 Paris Cedex 02 (FR)**

(54) **METHOD AND APPARATUS FOR TRANSMITTING AND RECEIVING PUCCH IN WIRELESS COMMUNICATION SYSTEM**

(57)     A method performed by a terminal according to an embodiment of the present disclosure includes receiving a PDCCH based on a CORESET and transmitting a PUCCH based on a PUCCH resource. DCI related to the PDCCH includes a PRI field. The PUCCH resource is determined based on i) a value of the PRI field, ii) a number of CCEs in the CORESET, and iii) an index of a first CCE for reception of the PDCCH among the CCEs. The CCEs in a CORESET are obtained before puncturing related to the CORESET.

【FIG. 7】

EP 4 712 647 A1

**Description**

[TECHNICAL FIELD]

The present disclosure relates to a method and an apparatus for transmitting and receiving a PUCCH in a wireless communication system.

[BACKGROUND]

Mobile communication systems have been developed to provide a voice service while ensuring the activity of a user. However, in the mobile communication system, not only a voice, but also a data service is extended. At present, there is a shortage of resources due to an explosive increase in traffic, and users demand a higher speed service. As a result, a more advanced mobile communication system is required.

Requirements for a next-generation mobile communication system should be able to support the acceptance of explosive data traffic, a dramatic increase in the per-user data rate, the acceptance of a significant increase in the number of connected devices, very low end-to-end latency, and high-energy efficiency. To this end, various technologies are researched, which include dual connectivity, massive multiple input multiple output (MIMO), in-band full duplex, non-orthogonal multiple access (NOMA), super wideband support, device networking, and the like.

In order to efficiently support various use cases in 5G in terms of cost/complexity, a maximum bandwidth of newly introduced user equipment (UE) types may be reduced. For example, a maximum bandwidth can be reduced to 3 MHz.

As described above, since a channel bandwidth of less than 5 MHz is supported, a PDCCH can be received after RBs of a CORESET are punctured. After the corresponding PDCCH (DCI) is received, the PUCCH can be transmitted for HARQ-ACK feedback.

[DISCLOSURE]

[TECHNICAL PROBLEM]

Factors for determining a PUCCH resource for PUCCH transmission, $N_{CCE}$ and $n_{CCE}$ are determined based on CCEs in a CORESET. As described above, it may be ambiguous how the PUCCH resource should be determined when the PUCCH is transmitted after receiving the PDCCH based on the reduced channel bandwidth. That is, in determining a number of CCEs in the CORESET, $N_{CCE}$ and a first CCE index for receiving the PDCCH, $n_{CCE}$, it may be ambiguous whether the puncturing described above should be considered.

Specifically, when a CORESET based on an existing defined size (e.g., 24 RBs) is reused for PDCCH transmission and reception, the following problem may occur. A PUCCH resource determined by a base station (i.e., a PUCCH resource expected by the base station to receive the PUCCH from a terminal) may be different from a PUCCH resource determined by the terminal. As an example, the base station determines $N_{CCE}$ and $n_{CCE}$ by considering puncturing, while the terminal may determine $N_{CCE}$ and $n_{CCE}$ without the puncturing. In this case, the PUCCH resource determined by the terminal and the PUCCH resource determined by the base station may be different.

An object of the present disclosure is to provide a method for solving the above-described problems.

The technical objects to be achieved by the present disclosure are not limited to those that have been described hereinabove merely by way of example, and other technical objects that are not mentioned can be clearly understood by those skilled in the art, to which the present disclosure pertains, from the following descriptions.

[TECHNICAL SOLUTION]

A method performed by a user equipment (UE) in a wireless communication system according to an embodiment of the present disclosure comprises receiving a Physical Downlink Control Channel (PDCCH) based on a COntrol REsource SET (CORESET), and transmitting a Physical Uplink Control Channel (PUCCH) based on a PUCCH resource.

The CORESET is obtained based on puncturing highest-numbered resource blocks among resource blocks based on a frequency domain size of the CORESET.

Downlink control information (DCI) related to the PDCCH includes a PUCCH Resource Indicator (PRI) field.

The PUCCH resource is determined based on i) a value of the PRI field, ii) a number of Control Channel Elements (CCEs) in the CORESET and iii) an index of a first CCE for the reception of the PDCCH among the CCEs.

The CCEs in the CORESET are obtained prior to the puncturing.

The PUCCH resource may be based on i) a common configuration or ii) a dedicated configuration.

The method may further comprise receiving the common configuration. The common configuration may include information for an index related to one of PUCCH resource sets.

The PUCCH resource may be one of 16 PUCCH resources within a PUCCH resource set based on the index.

The method may further comprise receiving the dedicated configuration. The dedicated configuration may include information for one or more PUCCH resource sets.

A PUCCH resource set may be determined among the one or more PUCCH resource sets based on a number of bits related to Uplink Control Information (UCI).

The PUCCH resource may be one of PUCCH resources within the determined PUCCH resource set.

The number of PUCCH resources may be larger than 8.

A channel bandwidth related to the CORESET may be smaller than 5 MHz.

The CORESET may be i) a first CORESET or ii) one of second CORESETs configured separately from the first CORESET. The first CORESET may be configured based on a Master Information Block (MIB).

A user equipment (UE) operating in a wireless communication according to another embodiment of the present disclosure comprises one or more transceivers, one or more processors, and one or more memories connected to the one or more processors and configured to store instructions.

The instructions, based on being executed by the one or more processors, configure the one or more processors to perform all steps of any one of the methods.

A device according to another embodiment of the present disclosure comprises one or more memories and one or more processors operably connected to the one or more memories.

The one or more memories are configured to store instructions based on being executed by the one or more processors, and the instructions are configured to allow the one or more processors to perform all steps of any one of the methods.

One or more non-transitory computer readable mediums according to another embodiment of the present disclosure stores instructions. The instructions executable by one or more processors are configured to allow the one or more processors to perform all steps of any one of the methods.

A method performed by a base station in a wireless communication system according to another embodiment of the present disclosure comprises transmitting a Physical Downlink Control Channel (PDCCH) based on a COntrol REsource SET (CORESET), and receiving a Physical Uplink Control Channel (PUCCH) based on a PUCCH resource.

The CORESET is obtained based on puncturing highest-numbered resource blocks among resource blocks based on a frequency domain size of the CORESET.

Downlink control information (DCI) related to the PDCCH includes a PUCCH Resource Indicator (PRI) field.

The PUCCH resource is determined based on i) a value of the PRI field, ii) a number of Control Channel Elements (CCEs) in the CORESET and iii) an index of a first CCE for the reception of the PDCCH among the CCEs.

The CCEs in the CORESET are obtained prior to the puncturing.

A base station operating in a wireless communication according to another embodiment of the present disclosure comprises one or more transceivers, one or more processors, and one or more memories connected to the one or more processors and configured to store instructions.

The instructions, based on being executed by the one or more processors, are configured to allow the one or more processors to perform all steps of any one of the methods.

[ADVANTAGEOUS EFFECTS]

According to the embodiment of the present disclosure, CCEs related to the determination of the PUCCH resource are obtained before puncturing. When receiving the PDCCH in the CORESET to which the puncturing is applied, factors related to the determination of the PUCCH resource are defined based on the CCEs before the puncturing. Therefore, a terminal/base station operation ambiguity related to PUCCH resource determination in a signaling procedure performed based on the CORESET to which the punctuation is applied can be resolved.

In addition, a reliability of HARQ-ACK feedback performed in a narrowband can be improved. Furthermore, a problem that can occur when a narrowband terminal/spectrum scenario is supported can be solved, thereby contributing to extension of an application use case of an NR system.

Effects that could be achieved with the present disclosure are not limited to those that have been described hereinabove merely by way of example, and other effects and advantages of the present disclosure will be more clearly understood from the following description by a person skilled in the art to which the present disclosure pertains.

[BRIEF DESCRIPTION OF THE DRAWINGS]

FIG. 1 illustrates an example of a frame structure in an NR system.

FIG. 2 illustrates an example of a resource grid in NR.

FIG. 3 illustrates physical channels and general signal transmission used in a 3GPP system.

FIG. 4 is a diagram illustrating an SSB structure to which a method proposed in the present disclosure is applicable.

FIG. 5 illustrates SSB transmission to which a method proposed in the present disclosure is applicable.

FIG. 6 illustrates a time-frequency structure of SSB according to an embodiment of the present disclosure.

FIG. 7 is a flowchart illustrating a method performed by a user equipment according to an embodiment of the present disclosure.

FIG. 8 is a flowchart illustrating a method performed by a base station according to another embodiment of the present disclosure.

FIG. 9 illustrates configuration of a first device and a second device according to an embodiment of the present disclosure.

[DETAILED DESCRIPTION]

Hereinafter, downlink (DL) means communication from the base station to the terminal and uplink (UL) means communication from the terminal to the base station. In downlink, a transmitter may be part of the base station, and a receiver may be part of the terminal. In uplink, the transmitter may be part of the terminal and the receiver may be part of the base station. The base station may be expressed as a first communication device and the terminal may be expressed as a second communication device. A base station (BS) may be replaced with terms including a fixed station, a Node B, an evolved-NodeB (eNB), a Next Generation NodeB (gNB), a base transceiver system (BTS), an access point (AP), a network (5G network), an AI system, a road side unit (RSU), a vehicle, a robot, an Unmanned Aerial Vehicle (UAV), an Augmented Reality (AR) device, a Virtual Reality (VR) device, and the like. Further, the terminal may be fixed or mobile and may be replaced with terms including a User Equipment (UE), a Mobile Station (MS), a user terminal (UT), a Mobile Subscriber Station (MSS), a Subscriber Station (SS), an Advanced Mobile Station (AMS), a Wireless Terminal (WT), a Machine-Type Communication (MTC) device, a Machine-to-Machine (M2M) device, and a Device-to-Device (D2D) device, the vehicle, the robot, an AI module, the Unmanned Aerial Vehicle (UAV), the Augmented Reality (AR) device, the Virtual Reality (VR) device, and the like.

The following technology may be used in various radio access system including CDMA, FDMA, TDMA, OFDMA, SC-FDMA, and the like. The CDMA may be implemented as radio technology such as Universal Terrestrial Radio Access (UTRA) or CDMA2000. The TDMA may be implemented as radio technology such as a global system for mobile communications (GSM)/general packet radio service (GPRS)/enhanced data rates for GSM evolution (EDGE). The OFDMA may be implemented as radio technology such as Institute of Electrical and Electronics Engineers (IEEE) 802.11 (Wi-Fi), IEEE 802.16 (WiMAX), IEEE 802.20, Evolved UTRA (E-UTRA), or the like. The UTRA is a part of Universal Mobile Telecommunications System (UMTS). 3rd Generation Partnership Project (3GPP) Long Term Evolution (LTE) is a part of Evolved UMTS (E-UMTS) using the E-UTRA and LTE-Advanced (A)/LTE-A pro is an evolved version of the 3GPP LTE. 3GPP NR (New Radio or New Radio Access Technology) is an evolved version of the 3GPP LTE/LTE-A/LTE-A pro.

For clarity of description, the technical spirit of the present disclosure is described based on the 3GPP communication system (e.g., LTE-A or NR), but the technical spirit of the disclosure is not limited thereto. LTE means technology after 3GPP TS 36.xxx Release 8. In detail, LTE technology after 3GPP TS 36.xxx Release 10 is referred to as the LTE-A and LTE technology after 3GPP TS 36.xxx Release 13 is referred to as the LTE-A pro. The 3GPP NR means technology after TS 38.xxx Release 15. The LTE/NR may be referred to as a 3GPP system. "xxx" means a detailed standard document number. The LTE/NR may be collectively referred to as the 3GPP system.

Matters disclosed in a standard document opened before the disclosure may be referred to for a background art, terms, omissions, etc., used for describing the disclosure. For example, the following documents may be referred to.

3GPP NR

-    3GPP TS 38.211: Physical channels and modulation
-    3GPP TS 38.212: Multiplexing and channel coding

- 3GPP TS 38.213: Physical layer procedures for control
- 3GPP TS 38.214: Physical layer procedures for data
- 3GPP TS 38.215: Physical layer measurements
- 3GPP TS 38.300: NR and NG-RAN Overall Description
- 3GPP TS 38.304: User Equipment (UE) procedures in idle mode and in RRC inactive state
- 3GPP TS 38.321: Medium Access Control (MAC) protocol
- 3GPP TS 38.322: Radio Link Control (RLC) protocol
- 3GPP TS 38.323: Packet Data Convergence Protocol (PDCP)
- 3GPP TS 38.331: Radio Resource Control (RRC) protocol
- 3GPP TS 37.324: Service Data Adaptation Protocol (SDAP)
- 3GPP TS 37.340: Multi-connectivity; Overall description
- 3GPP TS 23.287: Application layer support for V2X services; Functional architecture and information flows
- 3GPP TS 23.501: System Architecture for the 5G System
- 3GPP TS 23.502: Procedures for the 5G System
- 3GPP TS 23.503: Policy and Charging Control Framework for the 5G System; Stage 2
- 3GPP TS 24.501: Non-Access-Stratum (NAS) protocol for 5G System (5GS); Stage 3
- 3GPP TS 24.502: Access to the 3GPP 5G Core Network (5GCN) via non-3GPP access networks
- 3GPP TS 24.526: User Equipment (UE) policies for 5G System (5GS); Stage 3

As more and more communication devices require larger communication capacity, there is a need for improved mobile broadband communication compared to the existing radio access technology (RAT). Further, massive machine type communications (MTCs), which provide various services anytime and anywhere by connecting many devices and objects, are one of the major issues to be considered in the next generation communication. In addition, a communication system design considering a service/UE sensitive to reliability and latency is being discussed. The introduction of next generation radio access technology considering enhanced mobile broadband communication (eMBB), massive MTC (mMTC), ultra-reliable and low latency communication (URLLC) is discussed, and in the disclosure, the technology is called new RAT for convenience. The NR is an expression representing an example of 5G radio access technology (RAT).

In a new RAT system including NR uses an OFDM transmission scheme or a similar transmission scheme thereto. The new RAT system may follow OFDM parameters different from OFDM parameters of LTE. Alternatively, the new RAT system may follow numerology of conventional LTE/LTE-A as it is or have a larger system bandwidth (e.g., 100 MHz). Alternatively, one cell may support a plurality of numerologies. In other words, UEs that operate with different numerologies may coexist in one cell.

The numerology corresponds to one subcarrier spacing in a frequency domain. Different numerologies may be defined by scaling reference subcarrier spacing to an integer N.

**New Rat (NR) Numerology and Frame Structure**

In the NR system, multiple numerologies may be supported. The numerologies may be defined by subcarrier spacing and a cyclic prefix (CP) overhead. Spacing between the plurality of subcarriers may be derived by scaling basic subcarrier spacing into an integer N (or $\mu$). In addition, although a very low subcarrier spacing is assumed not to be used at a very high subcarrier frequency, a numerology to be used may be selected independent of a frequency band.

In addition, in the NR system, a variety of frame structures according to the multiple numerologies may be supported.

Hereinafter, an orthogonal frequency division multiplexing (OFDM) numerology and a frame structure, which may be considered in the NR system, will be described.

A plurality of OFDM numerologies supported in the NR system may be defined as in Table 1. $\mu$ for a bandwidth part and the cyclic prefix are obtained from RRC parameters provided by the BS.

[Table 1]

| $\mu$ | $\Delta f = 2^{\mu}*15$ [kHz] | Cyclic Prefix (CP) |
|---|---|---|
| 0 | 15 | Normal |
| 1 | 30 | Normal |
| 2 | 60 | Normal, Extended |
| 3 | 120 | Normal |
| 4 | 240 | Normal |

The NR supports multiple numerologies (or subcarrier spacing (SCS)) for supporting various 5G services. For example, when the SCS is 15 kHz, a wide area in traditional cellular bands is supported and when the SCS is 30 kHz/60 kHz, dense-urban, lower latency, and wider carrier bandwidth are supported, and when the SCS is more than 60 kHz, a bandwidth larger than 24.25 GHz is supported in order to overcome phase noise.

An NR frequency band is defined as two types of frequency ranges FR1 and FR2. FR1 may denote sub 6 GHz range, and FR2 may denote above 6 GHz range and may mean millimeter wave (mmW).

Table 2 below shows an example of definition of the NR frequency band.

[Table 2]

| Frequency Range Designation | Corresponding Frequency Range | Subcarrier Spacing |
|---|---|---|
| FR1 | 450MHz - 6000MHz | 15, 30, 60kHz |
| FR2 | 24250MHz - 52600MHz | 60, 120, 240kHz |

Regarding a frame structure in the NR system, a size of various fields in the time domain is expressed as a multiple of a time unit of $T_s = 1/(\Delta f_{max} \cdot N_f)$. In this case, $\Delta f_{max} = 480 \cdot 10^3$, and $N_f = 4096$. DL and UL transmission is configured as a radio frame having a section of $T_f = (\Delta f_{max} N_f/100) \cdot T_s = 10$ms. The radio frame is composed of ten subframes each having a section of $T_{sf} = (\Delta f_{max} N_f/1000) \cdot T_s = 1$ ms. In this case, there may be a set of UL frames and a set of DL frames.

Uplink frame number i for transmission from a user equipment (UE) shall start $T_{TA} = N_{TA}T_s$ before the start of a corresponding downlink frame at the corresponding UE.

For the numerology μ, slots are numbered in increasing order of $n_s^\mu \in \left\{0,..., N_{subframe}^{slots\mu} - 1\right\}$ within a subframe and are numbered in increasing order of $n_{s,f}^\mu \in \left\{0,..., N_{frame}^{slots\mu} - 1\right\}$ within a radio frame. One slot consists of consecutive OFDM symbols of $N_{symb}^\mu$, and $N_{symb}^\mu$ is determined depending on a numerology used and slot configuration. The start of slots $n_s^\mu$ in a subframe is aligned in time with the start of OFDM symbols $n_s^\mu N_{symb}^\mu$ in the same subframe.

Not all UEs are able to transmit and receive at the same time, and this means that not all OFDM symbols in a downlink slot or an uplink slot are available to be used.

Table 3 represents the number $N_{symb}^{slot}$ of OFDM symbols per slot, the number $N_{slot}^{frame,\mu}$ of slots per radio frame, and the number $N_{slot}^{subframe,\mu}$ of slots per subframe in a normal CP. Table 4 represents the number of OFDM symbols per slot, the number of slots per radio frame, and the number of slots per subframe in an extended CP.

[Table 3]

| $\mu$ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

[Table 4]

| $\mu$ | $N_{symb}^{slot}$ | $N_{slot}^{frame,\mu}$ | $N_{slot}^{subframe,\mu}$ |
|---|---|---|---|
| 2 | 12 | 40 | 4 |

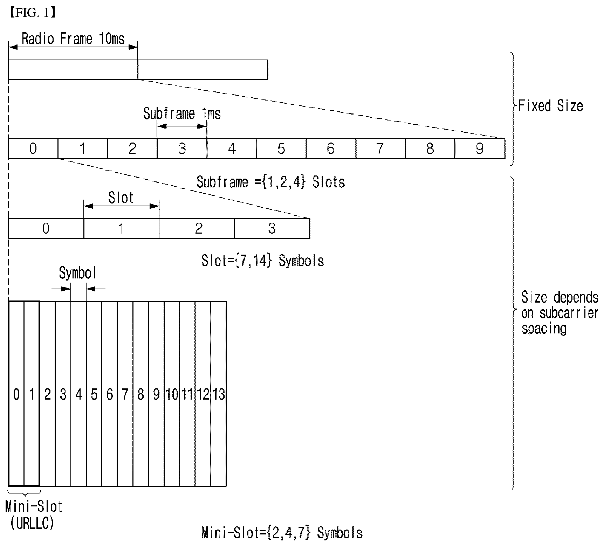

FIG. 1 illustrates an example of a frame structure in a NR system. FIG. 1 is merely for convenience of explanation and does not limit the scope of the disclosure.

In Table 4, in case of $\mu$ = 2, i.e., as an example in which a subcarrier spacing (SCS) is 60 kHz, one subframe (or frame) may include four slots with reference to Table 3, and one subframe = {1, 2, 4} slots shown in FIG. 1, for example, the number of slot(s) that may be included in one subframe may be defined as in Table 3.

Further, a mini-slot may consist of 2, 4, or 7 symbols, or may consist of more symbols or less symbols.

In regard to physical resources in the NR system, an antenna port, a resource grid, a resource element, a resource block, a carrier part, etc. may be considered.

The physical resources that may be considered in the NR system are described in detail below.

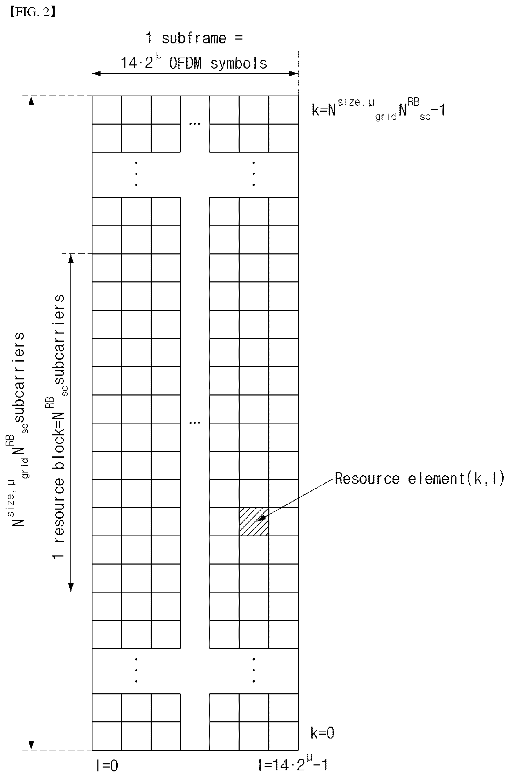

FIG. 2 illustrates an example of a resource grid supported in NR.

Referring to FIG. 2, for each subcarrier spacing configuration and carrier, a resource grid of $N^{size,\mu}_{grid}$*$N^{RB}_{sc}$ subcarriers and $14\cdot2^{\mu}$ OFDM symbols is defined, where $N^{size,\mu}_{grid}$ is indicated by RRC signaling from the BS. $N^{size,\mu}_{grid}$ may change between uplink and downlink as well as the subcarrier spacing configuration $\mu$.

Each element of the resource grid for the numerology $\mu$ and the antenna port p is called a resource element and is uniquely identified by an index pair $(k,\bar{l})$, where $k = 0,..., N^{\mu}_{RB} N^{RB}_{sc} - 1$ is an index on a frequency domain, and

$$\bar{l} = 0,...,2^{\mu} N^{(\mu)}_{symb} - 1$$ refers to a location of a symbol in a subframe. The index pair $(k,l)$ is used to refer to a resource element in a slot, where $l = 0,..., N^{\mu}_{symb} - 1$ .

The resource element $(k,\bar{l})$ for the numerology $\mu$ and the antenna port p corresponds to a complex value $a^{(p,\mu)}_{k,\bar{l}}$ . When there is no risk for confusion or when a specific antenna port or numerology is not specified, the indices p and $\mu$ may be dropped, and as a result, the complex value may be $a^{(p)}_{k,\bar{l}}$ or $a_{k,\bar{l}}$. Further, a physical resource block is defined as $N^{RB}_{sc} = 12$ consecutive subcarriers in the frequency domain.

Considering that the UE may not be able to support a wide bandwidth to be supported in the NR system at one time, the UE may be configured to operate in a part of a frequency bandwidth of a cell (hereinafter, referred to as a bandwidth part (BWP)).

Resource blocks of the NR system include physical resource blocks defined in the bandwidth part and common resource blocks that are numbered upward from 0 in a frequency domain for the subcarrier spacing configuration $\mu$.

Point A serves as a common reference point of a resource block grid and may be obtained as follows.

- offsetToPointA for a PCell downlink represents a frequency offset between point A and the lowest subcarrier of the lowest resource block that overlaps with the SS/PBCH block used by the UE for initial cell selection, and is expressed in units of resource blocks assuming 15 kHz subcarrier spacing for FR1 and 60 kHz subcarrier spacing for FR2;
- absoluteFrequencyPointA represents the frequency-location of point A expressed as in absolute radio-frequency channel number (ARFCN);

The common resource blocks are numbered from 0 and upwards in the frequency domain for subcarrier spacing configuration $\mu$.

The center of subcarrier 0 of common resource block 0 for the subcarrier spacing configuration $\mu$ coincides with "point A". A common resource block number $n^{\mu}_{CRB}$ in the frequency domain and resource elements (k, l) for the subcarrier spacing configuration $\mu$ may be given by the following Equation 1.

【Equation 1】

$$n^{\mu}_{CRB} = \left\lfloor \frac{k}{N^{RB}_{sc}} \right\rfloor$$

Here, k may be defined relative to point A so that k = 0 corresponds to a subcarrier centered around point A. Physical resource blocks are defined within a bandwidth part (BWP) and are numbered from 0 to $N^{size}_{BWP,i} - 1$, where i is a number of the BWP. A relation between the physical resource block $n_{PRB}$ in BWP $i$ and the common resource block $n_{CRB}$ may be given by the following Equation 2.

【Equation 2】

$$n_{CRB} = n_{PRB} + N_{BWP\,i}^{start}$$

Here, $N_{BWP\,i}^{start}$ may be the common resource block where the BWP starts relative to the common resource block 0.

### Bandwidth Part (BWP)

In the NR system, up to 400 MHz can be supported per one carrier. If a UE operating in such a wideband carrier is always operated with a radio frequency (RF) module for all carriers turned on, battery consumption by the UE may increase. Alternatively, considering several use cases (e.g., eMBB, URLLC, mMTC, V2X, etc.) that are operated in one wideband carrier, different numerologies (e.g., subcarrier spacing) may be supported for each frequency band in the corresponding carrier. Alternatively, a capability for a maximum bandwidth may be different for each UE. Considering this, a base station (BS) may indicate the UE to operate only in a partial bandwidths rather than the entire bandwidth of a wideband carrier, and the partial bandwidth is defined as a bandwidth part (BWP). The BWP in the frequency doamin is a subset of continuous common resource blocks defined for numerology $\mu$i within a bandwidth part i on the carrier, and one numerology (e.g., subcarrier spacing, CP length, slot/mini-slot duration) may be configured.

The BS may configure one or more BWPs within one carrier configured for the UE. Alternatively, if UEs are concentrated on a specific BWP, some UEs may be shifted to different BWPs for load balancing. Alternatively, both BWPs may be configured in the same slot excluding some center spectrums of the entire bandwidth considering frequency domain inter-cell interference cancellation between contiguous cells, etc. That is, the BS can configure at least one DL/UL BWP to a UE associated with the wideband carrier, can activate at least one DL/UL BWP of configured DL/UL BWP(s) at a specific time (by L1 signaling which is the physical layer control signal, MAC control element (CE) which is the MAC layer control signal, or RRC signaling, etc.) and indicate to switch to other configured DL/UL BWP (by L1 signaling, MAC CE, or RRC signaling, etc.), or can the UE to switch to a given DL/UL BWP if a timer value is set and a timer is expired. The activated DL/UL BWP is defined as an active DL/UL BWP. The UE may not receive configuration for the DL/UL BWP when the UE is in an initial access procedure or RRC connection of the UE is not set up yet. In this situation, a DL/UL BWP assumed by the UE is defined as an initial active DL/UL BWP.

### Physical Channel and General Signal Transmission

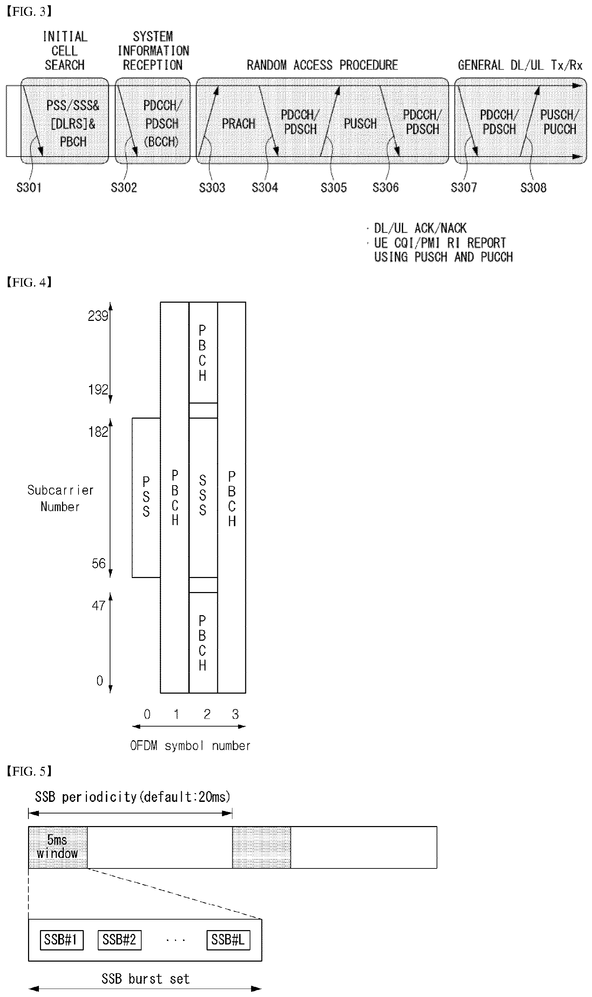

FIG. 3 illustrates physical channels and general signal transmission used in 3GPP systems. In a wireless communication system, the UE receives information from the eNB through downlink (DL) and the UE transmits information from the eNB through Uplink (UL). The information which the eNB and the UE transmit and receive includes data and various control information and there are various physical channels according to a type/use of the information which the eNB and the UE transmit and receive.

When the UE is powered on or newly enters a cell, the UE performs an initial cell search operation such as synchronizing with the eNB (S301). To this end, the UE may receive a primary synchronization signal (PSS) and a (secondary synchronization signal (SSS) from the eNB and synchronize with the eNB and acquire information such as a cell ID or the like. Thereafter, the UE may receive a physical broadcast channel (PBCH) from the eNB and acquire in-cell broadcast information. The UE receives a downlink reference signal (DL RS) in an initial cell search step to check a downlink channel status.

A UE that completes the initial cell search receives a Physical Downlink Control Channel (PDCCH) and a Physical Downlink Control Channel (PDSCH) according to information loaded on the PDCCH to acquire more specific system information (S302).

When there is no radio resource first accessing the eNB or for signal transmission, the UE may perform a Random Access Procedure (RACH) to the eNB (S303 to S306). To this end, the UE may transmit a specific sequence to a preamble through a Physical Random Access Channel (PRACH) (S303 and S305) and receive a response message (Random Access Response (RAR) message) for the preamble through the PDCCH and a corresponding PDSCH. In the case of a contention based RACH, a Contention Resolution Procedure may be additionally performed (S306).

The UE that performs the above procedure may then perform PDCCH/PDSCH reception (S307) and Physical Uplink Shared Channel (PUSCH)/Physical Uplink Control Channel (PUCCH) transmission (S308) as a general uplink/-

downlink signal transmission procedure. In particular, the UE may receive Downlink Control Information (DCI) through the PDCCH.

The UE monitors a set of PDCCH candidates in monitoring occasions configured to one or more control element sets (CORESETs) on a serving cell based on corresponding search space configurations. The set of PDCCH candidates to be monitored by the UE is defined in terms of search space sets, and the search space set may be a common search space set or a UE-specific search space set. The CORESET consists of a set of (physical) resource blocks with a duration of one to three OFDM symbols. A network may configure the UE to have a plurality of CORESETs. The UE monitors PDCCH candidates in one or more search space sets. Here, the monitoring means attempting to decode PDCCH candidate(s) in a search space. If the UE succeeds in decoding one of the PDCCH candidates in a search space, the UE determines that a PDCCH has been detected from the PDCCH candidates and performs PDSCH reception or PUSCH transmission based on DCI within the detected PDCCH.

The PDCCH may be used to schedule DL transmissions on PDSCH and UL transmissions on PUSCH. The DCI on the PDCCH includes downlink assignment (i.e., DL grant) related to a downlink shared channel and including at least a modulation and coding format and resource allocation information, or an uplink grant (UL grant) related to an uplink shared channel and including a modulation and coding format and resource allocation information. The DCI has different formats depending on its purpose.

The control information which the UE transmits to the eNB through the uplink or the UE receives from the eNB may include a downlink/uplink ACK/NACK signal, a Channel Quality Indicator (CQI), a Precoding Matrix Index (PMI), a Rank Indicator (RI), and the like. The UE may transmit the control information such as the CQI/PMI/RI, etc., through the PUSCH and/or PUCCH.

## Synchronization Signal Block (SSB) Transmission and Related Operation

FIG. 4 is a diagram illustrating an SSB structure to which a method proposed in the present disclosure is applicable. The UE may perform cell search, system information acquisition, beam alignment for initial access, DL measurement, and the like based on an SSB. The SSB is interchangeably used with a synchronization signal/physical broadcast channel (SS/PBCH) block.

Referring to FIG. 4, the SSB includes a PSS, an SSS and a PBCH. The SSB consists of four consecutive OFDM symbols, and the PSS, the PBCH, the SSS/PBCH or the PBCH is transmitted per OFDM symbol. Each of the PSS and the SSS consists of one OFDM symbol and 127 subcarriers, and the PBCH consists of 3 OFDM symbols and 576 subcarriers.

Polar coding and quadrature phase shift keying (QPSK) are applied to the PBCH. The PBCH consists of data REs and demodulation reference signal (DMRS) REs every OFDM symbol. Three DMRS REs are present per RB, and three data REs are present between the DMRS REs.

FIG. 5 illustrates SSB transmission to which a method proposed in the present disclosure is applicable.

The SSB is periodically transmitted in accordance with SSB periodicity. A default SSB periodicity assumed by a UE during initial cell search is defined as 20 ms. After cell access, the SSB periodicity may be set to one of {5 ms, 10 ms, 20 ms, 40 ms, 80 ms, 160 ms} by a network (e.g., a BS). An SSB burst set is configured at a beginning part of the SSB periodicity. The SSB burst set includes a 5 ms time window (i.e., half-frame), and the SSB may be transmitted up to N times within the SSB burst set. The maximum transmission number L of the SSB may be given as follows according to a frequency band of a carrier. One slot includes up to two SSBs.

-   For frequency range up to 3 GHz, L = 4
-   For frequency range from 3GHz to 6 GHz, L = 8
-   For frequency range from 6 GHz to 52.6 GHz, L = 64

A time location of SSB candidates within the SSB burst set may be defined depending on SCS as follows. The time location of the SSB candidates is indexed (SSB index) from 0 to L-1 based on time order within the SSB burst set (i.e., half-frame).

A plurality of SSBs may be transmitted within a frequency span of a carrier. Physical layer cell identifiers of these SSBs need not be unique, and other SSBs may have other physical layer cell identifiers.

The UE may acquire DL synchronization by detecting the SSB. The UE can identify a structure of the SSB burst set based on the detected SSB (time) index, and thus can detect a symbol/slot/half-frame boundary. The number of the frame/half-frame to which the detected SSB belongs may be identified using system frame number (SFN) information and half-frame indication information.

The contents described above can be combined and applied to methods described below in the present disclosure, or can be supplemented to clarify technical features of the methods described in the present disclosure. Methods described below are merely distinguished for convenience of explanation. Thus, it is obvious that partial configuration of any method can be substituted or combined with partial configuration of another method.

Technical terms used in the present disclosure

UE: User Equipment

SSB: Synchronization Signal Block

MIB: Master Information Block

RMSI: Remaining Minimum System Information

FR1: Frequency Range 1. It refers to a frequency domain of 6 GHz or less (e.g., 450 MHz to 6,000 MHz).

FR2: Frequency Range 2. It refers to millimeter wave (mmWave) domain of 24 GHz or higher (e.g., 24,250 MHz to 52,600 MHz).

BW: Bandwidth

BWP: Bandwidth Part

RNTI: Radio Network Temporary Identifier

CRC: Cyclic Redundancy Check

SIB: System Information Block

SIB1: SIB1 for NR devices = RMSI (Remaining Minimum System Information). It broadcasts information, etc. necessary for cell access of an NR UE.

CORESET (COntrol REsource SET): Time/frequency resource in which an NR UE tries candidate PDCCH decoding

CORESET#0: CORESET for Type0-PDCCH CSS set for NR devices (configured in MIB)

Type0-PDCCH CSS set: a search space set in which an NR UE monitors a set of PDCCH candidates for a DCI format with CRC scrambled by a SI-RNTI

MO: PDCCH Monitoring Occasion for Type0-PDCCH CSS set

SIB1-R: (additional) SIB 1 for reduced capability NR devices. It may be limited when it is generated with a separate TB from SIB 1 and is transmitted on a separate PDSCH.

CORESET#0-R: CORESET#0 for reduced capability NR devices

Type0-PDCCH-R CSS set: a search space set in which a redcap UE monitors a set of PDCCH candidates for a DCI format with CRC scrambled by a SI-RNTI

MO-R: PDCCH Monitoring Occasion for Type0-PDCCH CSS set

Cell defining SSB (CD-SSB): SSB including RMSI scheduling information among NR SSBs

Non-cell defining SSB (non-CD-SSB): SSB that has been deployed on NR sync raster, but does not include RMSI scheduling information of a corresponding cell for measurement. But, the SSB may include information informing a location of cell defining SSB.

SCS: subcarrier spacing

SI-RNTI: System Information Radio-Network Temporary Identifier

Camp on: "Camp on" is the UE state in which the UE stays on a cell and is ready to initiate a potential dedicated service or to receive an ongoing broadcast service.

TB: Transport Block

RSA (Redcap standalone): Cell supporting only redcap device or service

SIB1(-R)-PDSCH: PDSCH transmitting SIB1(-R)

SIB1(-R)-DCI: DCI scheduling SIB1(-R)-PDSCH. DCI format 1_0 with CRC scrambled by SI-RNTI.

SIB 1(-R)-PDCCH: PDCCH transmitting SIB1(-R)-DCI

FDRA: Frequency Domain Resource Allocation

TDRA: Time Domain Resource Allocation

RA: Random Access

MSGA: preamble and payload transmissions of the random access procedure for 2-step RA type.

MSGB: response to MSGA in the 2-step random access procedure. MSGB may consist of response(s) for contention resolution, fallback indication(s), and backoff indication.

RO-N: RACH Occasion (RO) for normal UE 4-step RACH and 2-step RACH (if configured)

RO-N1, RO-N2: If separate RO is configured for normal UE 2-step RACH, it is divided into RO-N1 (4-step) and RO-N2 (2-step).

RO-R: RACH Occasion (RO) separately configured from RO-N for redcap UE 4-step RACH and 2-step RACH(if configured)

RO-R1, RO-R2: If separate RO is configured for redcap UE 2-step RACH, it is divided into RO-R1 (4-step) and RO-R2 (2-step).

PG-R: MsgA-Preambles Group for redcap UEs

RAR: Random Access Response

RAR window: the time window to monitor RA response(s)

FH: Frequency Hopping
iBWP: initial BWP
iBWP-DL(-UL): initial DL(UL) BWP
iBWP-DL(-UL)-R: (separate) initial DL(UL) BWP for RedCap
CS: Cyclic shift
NB: Narrowband
TO: Traffic Offloading
mMTC; massive Machine Type Communications
eMBB: enhanced Mobile Broadband Communication
URLLC: Ultra-Reliable and Low Latency Communication
RedCap: Reduced Capability
eRedCap: enhanced RedCap
FDD: Frequency Division Duplex
HD-FDD: Half-Duplex-FDD
DRX: Discontinuous Reception
RRC: Radio Resource Control
RRM: Radio Resource Management
IWSN: Industrial Wireless Sensor Network
LPWA: Low Power Wide Area
RB: Resource Block
CCE: Control Channel Element
AL: Aggregation Level
PRG: Physical Resource-block Group
DFT-s-OFDM: DFT-spread OFDM
PBCH: Physical Broadcast Channel
A-PBCH: Additional PBCH
BD: blind detection
EPRE: Energy Per RE
SNR: Signal-to-Noise Ratio
TDM: Time Division Multiplexing
DMRS: DeModulation Reference Signal
TDD: Time Division Duplex
FDM: Frequency Division Multiplexing
PRI: PUCCH Resource Indicator
SS: Search Space

In the present disclosure, '()' can be interpreted as both when excluding content in parentheses and when including content in parentheses.

In the present disclosure, '/' can be interpreted as when including all the contents separated by '/' (and), or when including only a part of the separated contents (or).

The 5G wireless communication system is characterized by effectively supporting use cases, such as mMTC, eMBB, and URLLC, compared to the previous generation wireless communication system (e.g., LTE, GSM). Due to these advantages, the 5G wireless communication system is expected to create new use cases and gradually replace the previous generation wireless communication system for various use cases.

In particular, features such as enhanced low latency, high reliability, massive connection, etc. of the 5G wireless communication system may be very useful for services/use cases (hereinafter, referred to as NB services/use cases) that have been supported in an existing narrowband (NB) dedicated spectrum, as follows.

[Examples of services/use cases to which the present disclosure is applicable]

i) Railway mobile communication
ii) Utility/Infrastructure network
iii) Mobile communication for public safety

The NB services/use cases have been previously supported in a FDD dedicated spectrum with a bandwidth of about 3 MHz or more and less than 5 MHz in a frequency band less than 1 GHz using the previous generation wireless communication system.

A method of supporting the NB services/use cases in the 5G wireless communication system in the same environment (i.e., in a bandwidth of about 3 MHz or more and less than 5 MHz in a frequency band less than 1 GHz) is considered. To this end, it may be necessary to support a channel BW less than 5 MHz in the 5G NR standard. A minimum channel BW currently supported in the 5G NR standard is 5 MHz.

[Example of 5G NR frequency band for supporting NB service/use case (TS38.101-1)]

For example, the NB services/use cases can be supported in the following NR operating frequency band defined in NR standard TS38.101-1.

[Table 5]

| NR operating band | Uplink (UL) operating band | Downlink (DL) operating band | Duplex Mode |
|---|---|---|---|
| | BS receive/UE transmit FUL_low - FUL_high | BS transmit/UE receive FDL_low - FDL_high | |
| n8 | 880 MHz - 915 MHz | 925 MHz - 960 MHz | FDD |
| n26 | 814 MHz - 849 MHz | 859 MHz - 894 MHz | FDD |
| n28 | 703 MHz - 748 MHz | 758 MHz - 803 MHz | FDD |
| n100 | 874.4 MHz - 880 MHz | 919.4 MHz - 925 MHz | FDD |

Table 5 shows UL/DL operating band defined per NR operating band in Frequency Range1 FR1.

[Example of definition of channel BW less than 5 MHz for supporting NB service/use case]

Table 6 shows an example of the maximum number of configurable RBs ($N_{RB}$) for each channel BW. According to Table 6, in order to support the NB services/use cases based on 5G NR, 3 MHz channel BW and the maximum number of configurable RBs ($N_{RB}$) (= 15) in the 3 MHz channel BW are defined, and in this case, a resource utilization ratio (or RU) is defined. The RU may be defined as below.

$$RU = (N_{RB} \text{ in MHz}) / (\text{channel BW in MHz})$$

[Table 6]

| Channel BW | 3 MHz | 5 MHz | 10 MHz | 15 MHz | 20 MHz | 25 MHz | 30 MHz | 40 MHz | 50 MHz |
|---|---|---|---|---|---|---|---|---|---|
| NRB | 15 | 25 | 52 | 79 | 106 | 133 | 160 | 216 | 270 |
| RU | 0.9 | 0.9 | 0.936 | 0.948 | 0.954 | 0.958 | 0.96 | 0.972 | 0.972 |

For example, for newly defined 3 MHz channel BW, one of $N_{RB}$ values shown in Table 7 below may be defined and used considering interference between contiguous channels and a resource utilization ratio. For example, multiple values of $N_{RB}$ values shown in Table 7 below may be supported in the NR standard and may be supported/used by base station configuration.

[Table 7]

| SCS (kHz) | 3 MHz | | | | |
|---|---|---|---|---|---|
| | $N_{RB}$ | $N_{RB}$ | $N_{RB}$ | $N_{RB}$ | $N_{RB}$ |
| 15 | 12 | 13 | 14 | 15 | 16 |
| RU(%) | 0.72 | 0.78 | 0.84 | 0.9 | 0.96 |

For example, the channel BW/$N_{RB}$ may be applied for both DL and UL as the same value. For example, the channel BW/$N_{RB}$ may be configured/supported separately/independently for DL and UL. A method according to the second example may be applied to the following situation. The method may be used to when intending to apply conditions where additional DFT precoding is applicable only to the UL when determining the $N_{RB}$ values, while supporting the maximum channel BW/$N_{RB}$ values in both DL and UL considering interference between contiguous channels and the resource utilization ratio.

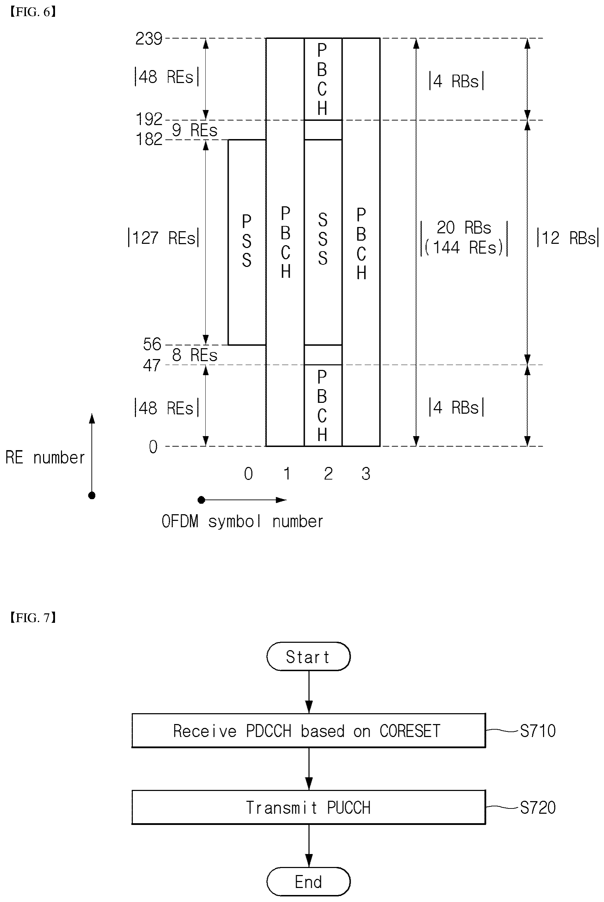

If a channel BW less than 5 MHz is newly supported in the NR standard, there may be a problem with the reception of existing NR common/broadcast signal/channel. For example, if an SSB transmission bandwidth exceeds a minimum channel BW newly supported, the entire SSB may not be transmitted/received. This is described in detail with reference to FIG. 6.

FIG. 6 illustrates an example of a time-frequency structure of an SSB according to an embodiment of the present disclosure. Specifically, FIG. 6 illustrates the number of REs/the number of RBs in the time-frequency structure of FIG. 4 is added for each domain. Referring to FIG. 6, a frequency domain (bandwidth) for PSS and SSS consists of 127 resource elements (REs). A frequency domain (bandwidth) for PBCH consists of 20 resource blocks (RBs) (= 144 REs) or 4 RBs (= 48 REs).

As shown in Tables 6 and 7, $N_{RB}$ may be determined as one value of {12, 13, 14, 15}. For example, it may be assumed that $N_{RB}$ is 12 (12 PRBs = 2,16 MHz), and SSB has 15 kHz SCS (subcarrier spacing). The transmission/reception of the entire PSS/SSS bandwidth (127 REs = 1.905 MHz) is possible, but the entire transmission/reception may not be possible for PBCH (20 PRBs = 3.6 MHz).

In this case, the UE can normally receive the PSS/SSS (without reception coverage loss) by the UE operation defined in the existing NR standard. On the other hand, a reception coverage loss may be unavoidable for the PBCH. This may result in the overall reception coverage loss of the UE operating in a narrowband.

In order to receive an SIB1-PDCCH in a narrowband, the UE may receive CORESET#0 and Type0-PDCCH CSS set information through an MIB transmitted through the PBCH. Since a bandwidth of CORESET#0 supported by a current NR standard is 24 PRBs (4.32 MHz) based on 15 kHz SCS, narrowband channel BWs shown in Tables 6 and 7 may be exceeded. In this case, the base station may transmit only the PDCCH transmission REs belonging to a channel BW after RE mapping PDCCH transmission REs to CORESET#0. That is, a remaining portion may be transmitted by puncturing/-truncating of PDCCH transmission REs exceeding the channel BW. Puncturing related to the CORESET may be performed based on Table 8 below.

[Table 8]

| |
|---|
| 7.3.2.2 Control-resource set (CORESET) |
| A control-resource set consists of $N_{RB}^{CORESET}$ resource blocks in the frequency domain and $N_{symb}^{CORESET} \in \{1,2,3\}$ symbols in the time domain. |
| A control-channel element consists of 6 resource-element groups (REGs) where a resource-element group equals one resource block during one OFDM symbol. Resource-element groups within a control-resource set are numbered in increasing order in a time-first manner, starting with 0 for the first OFDM symbol and the lowest-numbered resource block in the control resource set. |
| For CORESET 0 on a carrier where the SS/PBCH block is detected at sync raster points defined in Tables 5.4.3.1-2 or 5.4.3.1-3 of [14, TS 38.101-1] and configured by the *ControlResourceSetZero* IE: |
|   - $N_{RB}^{CORESET}$ and $N_{symb}^{CORESET}$ are defined by Table 13-0 in clause 13 of [5, TS 38.213]; |
| - if $N_{RB}^{CORESET} = 12$ on a carrier with a channel bandwidth of 3 MHz, the CORESET is obtained by applying the description above assuming interleaved mapping with *R = 2*; |
| - if $N_{RB}^{CORESET} = 24$ on a carrier with a channel bandwidth of 3 MHz, the CORESET is obtained by applying the description above assuming interleaved mapping with *R = 2* or non-interleaved mapping as defined by clause 13 of [5, TS 38.213], followed by puncturing the 9 highest-numbered resource blocks to obtain the 15 resource blocks forming CORESET 0; |
| - if $N_{RB}^{CORESET} = 24$ on a carrier with a channel bandwidth of 5 MHz, the CORESET is obtained by applying the description above assuming interleaved mapping with *R = 2*, followed by puncturing the 4 highest-numbered resource blocks to obtain the 20 resource blocks forming CORESET 0; |

The present disclosure proposes a method for determining a PUCCH transmission resource when CORESET#0 or the CORESET exceeds a narrowband channel BW or a max transmission BW defined for the narrowband in the narrowband.

In the present disclosure, the narrowband and NB may be interchanged and interpretable/applicable. In addition, the channel BW and the maximum transmission BW (max transmission BW) may also be interchanged, and interpretable/applicable.

In the present disclosure, broadcast signaling includes a signaling method, etc. using system information including SIB1, MIB, a PBCH payload generated in a PHY layer in addition to MIB, and a PBCH scrambling sequence and PBCH DMRS sequence initialization information.

PUCCH transmission method in narrowband

For common PUCCH transmission through an initial UL BWP in the narrowband, the base station selects one of 16 PUCCH resource sets defined in Table 9 below, and transmits index (0 to 15) values corresponding to the selected PUCCH resource set through broadcast signaling (in this case, SIB1). The UE determines a common PUCCH resource set to be used for the common PUCCH transmission by referring to the PUCCH resource set index value which the base station transmits through the broadcast signaling, and a table of Table 9 below. In the present disclosure, the common PUCCH transmission may mean PUCCH transmission before receiving a dedicated PUCCH resource configuration.

[Table 9]

| Table 9.2.1-1: PUCCH resource sets before dedicated PUCCH resource configuration | | | | | |
|---|---|---|---|---|---|
| Index | PUCCH format | First symbol | Number of symbols | PRB offset $RB_{\text{BWP}}^{\text{offset}}$ | Set of initial CS indexes |
| 0 | 0 | 12 | 2 | 0 | {0, 3} |
| 1 | 0 | 12 | 2 | 0 | {0, 4, 8} |
| 2 | 0 | 12 | 2 | 3 | {0, 4, 8} |
| 3 | 1 | 10 | 4 | 0 | {0, 6} |
| 4 | 1 | 10 | 4 | 0 | {0, 3, 6, 9} |
| 5 | 1 | 10 | 4 | 2 | {0, 3, 6, 9} |
| 6 | 1 | 10 | 4 | 4 | {0, 3, 6, 9} |
| 7 | 1 | 4 | 10 | 0 | {0, 6} |
| 8 | 1 | 4 | 10 | 0 | {0, 3, 6, 9} |
| 9 | 1 | 4 | 10 | 2 | {0, 3, 6, 9} |
| 10 | 1 | 4 | 10 | 4 | {0, 3, 6, 9} |
| 11 | 1 | 0 | 14 | 0 | {0, 6} |
| 12 | 1 | 0 | 14 | 0 | {0, 3, 6, 9} |
| 13 | 1 | 0 | 14 | 2 | {0, 3, 6, 9} |
| 14 | 1 | 0 | 14 | 4 | {0, 3, 6, 9} |
| 15 | 1 | 0 | 14 | $\lfloor N_{\text{BWP}}^{\text{size}}/4 \rfloor$ | {0, 3, 6, 9} |

The base station/UE determines a resources for transmitting the common PUCCH in a scheme shown in Table 10 below when transmitting the common PUCCH.

[Table 10]

> If the UE provides HARQ-ACK information in a PUCCH transmission in response to detecting a DCI format scheduling a PDSCH reception or having associated HARQ-ACK information without scheduling a PDSCH reception, the UE determines a PUCCH resource with index $r_{\text{PUCCH}}$, $0 \leq r_{\text{PUCCH}} \leq 15$, as $r_{\text{PUCCH}} = \left\lfloor \frac{2 \cdot n_{\text{CCE},0}}{N_{\text{CCE}}} \right\rfloor + 2 \cdot \Delta_{\text{PRI}}$, where $N_{CCE}$ is a number of CCEs in a CORESET of a PDCCH reception with the DCI format, as described in clause 10.1, $n_{\text{CCE},0}$ is the index of a first CCE for the PDCCH reception, and $\Delta_{\text{PRI}}$ is a value of the PUCCH resource indicator field in the DCI format.

That is, the PUCCH transmission resource for transmitting the common PUCCH is dynamically indicated/determined based on a 3-bit PUCCH Resource Indicator (PRI) indicated through the DCI, and $N_{CCE}$ and $n_{CCE,0}$ defined in Table 10.

As mentioned above, an entirety of CORESET#0 may not be included in the narrowband channel BW due to a reason that CORESET#0 exceeds the narrowband channel BW in the narrowband. In this case, the base station may perform RE mapping for the PDCCH for the entirety of CORESET#0 in a conventional scheme, and then transmit only the PDCCH transmission REs belonging to the narrowband channel BW in units of RE/REG/CCE/RB (or the base station may puncture and transmit the PDCCH transmission REs not belonging to the narrowband channel BW in units of RE/REG/CCE/RB). In a situation in which some of the PDCCH transmission REs are punctured through CORESET#0, the base station/UE may indicate/determine a $n_{CCE,0}$ value (and $N_{CCE}$) by a following method in order to select a common PUCCH transmission resource corresponding to the situation.

Hereinafter, for convenience of description, the indication/determination of the $n_{CCE,0}$ value will be primarily, but an application range of an embodiment to be described below is not limited to be applied only to the indication/determination of the $n_{CCE,0}$ value. That is, it is apparent that embodiments/methods to be described below may be extensively applied to indication/determination of values (at least one of $n_{CCE,0}$, $N_{CCE}$, and/or $\Delta_{PRI}$) related to the determination of the PUCCH resource as defined in Table 10. As a specific example, when a number of CCEs, $N_{CCE}$ within the CORESET (e.g., CORESET#0 and CORESET#p) is changed, the CCE index (e.g., $n_{CCE,0}$ and $n_{CCE,p}$) may also be changed. Therefore, the embodiments/methods described below may be applied for the indication/determination of $n_{CCE,0}$ ($n_{CCE,p}$) and/or $N_{CCE}$. In Method #1 to Method #4, indication/determination of the values of $n_{CCE,0}$ ($n_{CCE,p}$) may be interpreted/interchanged as 'indication/determination of $N_{CCE}$ ($N_{CCE,p}$)' or "indication/determination of $n_{CCE,0}$($n_{CCE,p}$) and $N_{CCE}$($N_{CCE,p}$)'.

[Method #1]

When the entirety of CORESET#0 is not included in the narrowband channel BW and some of the PDCCH transmission REs are punctured and the PDCCH is transmitted/received, a value of $n_{CCE,0}$ may be indicated/determined as follows.

As an example, the value of $n_{CCE,0}$ may be determined based on a CCE index before performing PDCCH puncturing. As an example, the value of $n_{CCE,0}$ may be determined based on a CCE index in a PDCCH RE mapping step for the entirety of CORESET#0.

That is, even when some of the PDCCH transmission REs through actual CORESET#0 are punctured and transmitted/received, the base station/UE may assume that punctuation is not applied regardless of whether puncturing being applied, and indicate/determine the value of $n_{CCE,0}$. According to the embodiment, $N_{CCE}$ may be the number of CCEs in CORESET#0 before performing the PDCCH puncturing.

[Method #2]

When the entirety of CORESET#0 is not included in the narrowband channel BW and some of the PDCCH transmission REs are punctured and the PDCCH is transmitted/received, the value of $n_{CCE,0}$ may be indicated/determined based on a CCE index after the PDCCH puncturing.

Specifically, when some of the PDCCH transmission REs through actual CORESET#0 are punctured and transmitted/received, the value of $n_{CCE,0}$ may be indicated/determined as follows. As an example, the value of $n_{CCE,0}$ may be indicated/determined in a state of excluding some or all punctured CCE indexes. As an example, the value of $n_{CCE,0}$ may be indicated/determined among all transmitted/received CCE indexes without puncturing.

Alternatively, when some of the PDCCH transmission REs through actual CORESET#0 are punctured and transmitted/received, the value of $n_{CCE,0}$ may be indicated/determined as follows. As an example, the value of $n_{CCE,0}$ may be indicated/determined in a state of excluding only all punctured CCE indexes. As an example, the value of $n_{CCE,0}$ may be indicated/determined among some or all received CCE indexes.

According to the embodiment, $N_{CCE}$ may be a number of CCEs in CORESET#0 before performing the PDCCH puncturing.

The methods (Method #1 and Method #2) are not limited to common PUCCH transmission, but may also be applied to dedicated PUCCH transmission after receiving a dedicated PUCCH resource configuration. Further, in the methods, CORESET#0 may be interchanged, and interpreted/applied as other general CORESETs, i.e., CORESET#p (p is 1, 2, etc.).

After receiving the dedicated PUCCH resource configuration, the UE determines a PUCCH resource set by a scheme shown in Table 11 below for PUCCH transmission for HARQ ACK feedback.

[Table 11]

A UE can be configured up to four sets of PUCCH resources in a *PUCCH-Config.* A PUCCH resource set is provided *by PUCCH-ResourceSet* and is associated with a PUCCH resource set index provided by *pucch-ResourceSetId,* with a set of PUCCH resource indexes provided by *resourceList* that provides a set of *pucch-ResourceId* used in the PUCCH resource set, and with a maximum number of UCI information bits the UE can transmit using a PUCCH resource in the PUCCH resource set provided by *maxPayloadSize.* For the first PUCCH resource set, the maximum number of UCI information bits is 2. A maximum number of PUCCH resource indexes for a set of PUCCH resources is provided by *maxNrofPUCCH-ResourcesPerSet.* The maximum number of PUCCH resources in the first PUCCH resource set is 32 and the maximum number of PUCCH resources in the other PUCCH resource sets is 8.

If the UE transmits $O_{\text{UCI}}$ UCI information bits, that include HARQ-ACK information bits, the UE determines a PUCCH resource set to be

- a first set of PUCCH resources with *pucch-ResourceSetId* = 0 if $O_{\text{UCI}} \leq 2$ including 1 or 2 HARQ-ACK information bits and a positive or negative SR on one SR transmission occasion if transmission of HARQ-ACK information and SR occurs simultaneously, or

- a second set of PUCCH resources with *pucch-ResourceSetId* = 1, if provided by higher layers, if $2 < O_{\text{UCI}} \leq N_2$ where $N_2$ is equal to *maxPayloadSize* if *maxPayloadSize* is provided for the PUCCH resource set with *pucch-ResourceSetId* = 1; otherwise $N_2$ is equal to 1706, or

- a third set of PUCCH resources with *pucch-ResourceSetId* = 2, if provided by higher layers, if $N_2 < O_{\text{UCI}} \leq N_3$ where $N_3$ is equal to *maxPayloadSize* if *maxPayloadSize* is provided for the PUCCH resource set with *pucch-ResourceSetId* = 2; otherwise $N_3$ is equal to 1706, or

- a fourth set of PUCCH resources with *pucch-ResourceSetId* = 3, if provided by higher layers, if $N_3 < O_{\text{UCI}} \leq 1706.$

In the case of a first PUCCH resource set, it is possible to configure up to 32 PUCCH resources. When the number of PUCCH resources in the first PUCCH resource set more than 8, the PUCCH resource is determined in the first PUCCH resource set by a scheme shown in Table 12 below.

[Table 12]

For the first set of PUCCH resources and when the size $R_{\text{PUCCH}}$ of *resourceList* is larger than eight, when a UE provides HARQ-ACK information in a PUCCH transmission in response to detecting a last DCI format in a PDCCH reception, among DCI formats with a value of the PDSCH-to-HARQ_feedback timing indicator field, if present, or a value of *dl-DataToUL-ACK,* or *dl-DataToUL-ACK-r16,* or *dl-DataToUL-ACK-DCI-1-2,* or *dl-DataToUL-ACK-r17,* or *dl-DataToUL-ACK-DCI-1-2-r17,* or *dl-DataToUL-ACK-MulticastDCI-Format4-1,* indicating a same slot for the PUCCH transmission, the UE determines a PUCCH resource with index $r_{\text{PUCCH}}$, $0 \leq r_{\text{PUCCH}} \leq R_{\text{PUCCH}} - 1$, as

$$r_{\text{PUCCH}} = \begin{cases} \left\lfloor \dfrac{n_{\text{CCE},p} \cdot \left\lfloor R_{\text{PUCCH}}/8 \right\rfloor}{N_{\text{CCE},p}} \right\rfloor + \Delta_{\text{PRI}} \cdot \left\lceil \dfrac{R_{\text{PUCCH}}}{8} \right\rceil & \text{if} \quad \Delta_{\text{PRI}} < R_{\text{PUCCH}} \bmod 8 \\[4mm] \left\lfloor \dfrac{n_{\text{CCE},p} \cdot \left\lfloor R_{\text{PUCCH}}/8 \right\rfloor}{N_{\text{CCE},p}} \right\rfloor + \Delta_{\text{PRI}} \cdot \left\lfloor \dfrac{R_{\text{PUCCH}}}{8} \right\rfloor + R_{\text{PUCCH}} \bmod 8 & \text{if} \quad \Delta_{\text{PRI}} \geq R_{\text{PUCCH}} \bmod 8 \end{cases}$$

where $N_{\text{CCE},p}$ is a number of CCEs in CORESET p of the PDCCH reception for the DCI format as described in clause 10.1, $n_{\text{CCE},p}$ is the index of a first CCE for the PDCCH reception, and $\Delta_{\text{PRI}}$ is a value of the PUCCH resource indicator field in the DCI format.

That is, the PUCCH resource for the dedicated PUCCH may be indicated/determined similarly to the PUCCH resource indication/determination method for the common PUCCH transmission. Specifically, the corresponding PUCCH resource is dynamically indicated/determined by a 3-bit PUCCH Resource Indicator indicated through the DCI, and $n_{\text{CCE},p}$ (and $N_{\text{CCE},p}$) defined in Table 11 and Table 12. Therefore, even in the dedicated PUCCH transmission, when the number of PUCCH resources in the PUCCH resource set exceeds 8, a method similar to that in the common PUCCH transmission may be applied as follows.

As mentioned above, an entirety of CORESET#p may not be included in the narrowband channel BW due to a reason that CORESET#p exceeds the narrowband channel BW in the narrowband. The base station may perform RE mapping for the PDCCH for the entirety of CORESET#p in a conventional scheme with respect to the entirety of CORESET#p, and then transmit only the PDCCH transmission REs belonging to the narrowband channel BW in units of RE/REG/CCE/RB (or the base station may puncture and transmit the PDCCH transmission REs not belonging to the narrowband channel BW). As such, in a situation in which some of the PDCCH transmission REs are punctured through CORESET#p, the base station/UE may indicate/determine the value of $n_{CCE,p}$ by a following method in order to select a common PUCCH transmission resource corresponding to the situation.

[Method #3]

When the entirety of CORESET#p is not included in the narrowband channel BW and some of the PDCCH transmission REs are punctured and the PDCCH is transmitted/received, a value of $n_{CCE,p}$ may be indicated/determined as follows.

As an example, the value of $n_{CCE,p}$ may be determined based on the CCE index before performing the PDCCH puncturing. As an example, the value of $n_{CCE,p}$ may be determined based on a CCE index in a PDCCH RE mapping step for the entirety of CORESET#p.

That is, even when some of the PDCCH transmission REs through actual CORESET#p are punctured and transmitted/received, the base station/UE may assume that punctuation is not applied regardless of whether puncturing being applied, and indicate/determine the value of $n_{CCE,p}$. According to the embodiment, $N_{CCE}$ may be a number of CCEs in CORESET#p before performing the PDCCH puncturing.

[Method #4]

When the entirety of CORESET#p is not included in the narrowband channel BW and some of the PDCCH transmission REs are punctured and the PDCCH is transmitted/received, the value of $n_{CCE,p}$ may be indicated/determined based on the CCE index after the PDCCH puncturing.

Specifically, when some of the PDCCH transmission REs through actual CORESET#p are punctured and transmitted/received, the value of $n_{CCE,p}$ may be indicated/determined as follows. As an example, the value of $n_{CCE,p}$ may be indicated/determined in a state of excluding some or all punctured CCE indexes. As an example, the value of $n_{CCE,p}$ may be indicated/determined among all transmitted/received CCE indexes without puncturing.

Alternatively, when some of the PDCCH transmission REs through actual CORESET#p are punctured and transmitted/received, the value of $n_{CCE,p}$ may be indicated/determined as follows. As an example, the value of $n_{CCE,p}$ may be indicated/determined in a state of excluding only all punctured CCE indexes. As an example, the value of $n_{CCE,p}$ may be indicated/determined among some or all received CCE indexes.

According to the embodiment, $N_{CCE}$ may be a number of CCEs in CORESET#p after performing the PDCCH puncturing.

Hereinafter, tail a PUCCH resource determining method considering a scheme of using new CORESET#0 or a scheme of reusing conventional CORESET#0 when the narrow channel BW is smaller than a minimum bandwidth will be described in more detail.

As mentioned above, the narrowband channel BW may be smaller than the minimum bandwidth of the conventional CORESET#0 designed in consideration of a general bandwidth. In this case, the CORESET#0 bandwidth may exceed the narrowband channels BW. For example, Since a bandwidth of CORESET#0 supported by a current NR standard is 24 PRBs (4.32 MHz) based on 15 kHz SCS, narrowband channel BWs shown in Tables 6 and 7 may be exceeded. Two following schemes are proposed in order to support such a scenario.

[#1] New CORESET#0 reusing scheme

According to the scheme, new CORESET#0 having a small bandwidth included in the narrowband channel BW is defined and used, and the PDCCH is transmitted through the newly defined CORESET#0.

[Example #1] CORESET#0 of a 12-PRB bandwidth smaller than 24 PRBs which are the conventional bandwidth may be newly defined in order to support a 3 MHz channel bandwidth.

[#2] Conventional CORESET#0 reusing scheme

According to the scheme, conventional CORESET#0 may be reused, and the PDCCH may be transmitted by excluding a portion which is RE mapped by exceeding the narrowband channel BW or the PDCCH may be transmitted by puncturing/truncating a portion which is RE mapped by exceeding the narrowband channel BW.

That is, the base station performs PDCCH RE mapping for the entirety of the conventional CORESET#0 bandwidth in a conventional scheme. The base station may transmit only PDCCH transmission REs/RBs/REGs/REG bundles/CCEs included in the narrowband channel BW (that is, the PDCCH is transmitted based on the PDCCH transmission REs/RB/REG/REG bundles/CCEs that are included in a band channel BW). In this case, a meaning of "included" may include a meaning of "partially included" or "entirely included".

[Example #1] Existing 24-PRB CORESET#0 defined in the table (see Table 13 below) may be reused in order to support a 3-MHz channel bandwidth. For PDCCH transmission RE/RB/REG/REG bundle/CCEs that are RE mapped beyond 3 MHz bandwidth (e.g., 15 PRBs based on 15 kHz SCS), the PDCCH may not be transmitted through puncturing/truncation, or the UE may not expect/request PDCCH reception.

[Table 13]

Table 13-1: Set of resource blocks and slot symbols of CORESET for Type0-PDCCH search space set when {SS/PBCH block, PDCCH} SCS is {15, 15} kHz for frequency bands with minimum channel bandwidth 5 MHz or 10 MHz or with minimum channel bandwidth 3 MHz and channel bandwidth larger than 3 MHz

| Index | SS/PBCH block and CORESET multiplexing pattern | Number of RBs $N_{RB}^{CORESET}$ | Number of Symbols $N_{symb}^{CORESET}$ | Offset (RBs) |
|---|---|---|---|---|
| 0 | 1 | 24 | 2 | 0 |
| 1 | 1 | 24 | 2 | 2 |
| 2 | 1 | 24 | 2 | 4 |
| 3 | 1 | 24 | 3 | 0 |
| 4 | 1 | 24 | 3 | 2 |
| 5 | 1 | 24 | 3 | 4 |
| 6 | 1 | 48 | 1 | 12 |
| 7 | 1 | 48 | 1 | 16 |
| 8 | 1 | 48 | 2 | 12 |
| 9 | 1 | 48 | 2 | 16 |
| 10 | 1 | 48 | 3 | 12 |
| 11 | 1 | 48 | 3 | 16 |
| 12 | 1 | 96 | 1 | 38 |
| 13 | 1 | 96 | 2 | 38 |
| 14 | 1 | 96 | 3 | 38 |
| 15 | Reserved | | | |

The base station/UE may determine/indicate the PUCCH resource for transmitting the common PUCCH by a following method in a narrowband wireless communication system, including the scenario. $n_{CCE,0}$ and $\Delta_{PRI}$ follow existing definitions (e.g., Table 10). In addition, an existing defined/prescribed common PUCCH transmission resource determination procedure may be followed for a part which is not separately described in the present disclosure.

When the entirety of CORESET#0 is used for transmitting the PDCCH by applying the new CORESET#0 using scheme, there may be no problem in applying the conventional scheme. That is, in this case, the base station/UE may determine/indicate $N_{CCE}$ and $n_{CCE,0}$ based on the conventional scheme. That is, $N_{CCE}$ (the number of CCEs in CORESET#0) may be determined/indicated based on the CORESET#0 bandwidth, and $n_{CCE,0}$ (a first CCE index of the PDCCH) may be determined/indicated through a CCE frequency location of the PDCCH.

Meanwhile, in the scenario to which the conventional CORESET#0 reusing scheme is applied, the entirety of CORESET#0 may not be used for transmitting the PDCCH. In this case, there may be a confusion for the determination/indication of $N_{CCE}$ and $n_{CCE,0}$ between the base station and the UE or between the UEs. There may be a problem in transmitting/receiving the common PUCCH. The following methods are proposed in order to solve such a problem, and support the transmission of the common PUCCH.

[Method #5]

A method for determining $N_{CCE}$ and $n_{CCE,0}$ based on the PDCCH transmission/reception bandwidth may be considered.

According to the conventional scheme, $N_{CCE}$ is defined as "number of CCEs in a CORESET of a PDCCH reception". As exemplified in the scenario to which the conventional CORESET#0 reusing scheme is applied, when the entire CORESET#0 bandwidth is not used for PDCCH transmission/reception, $N_{CCE}$ and $n_{CCE,0}$ may be determined/indicated as follows.

Based on the "PDCCH transmission/reception bandwidth", i.e., a bandwidth in which actual PDCCH transmission/reception is enabled in the CORESET #0 bandwidth, the base station/UE may determine/indicate $N_{CCE}$ and $n_{CCE,0}$. In this case, the PDCCH transmission/reception bandwidth in the CORESET#0 bandwidth may be determined to be a value smaller than or equal to i) a (maximum/supported) transmission bandwidth supported by the narrowband or ii) a (maximum/supported) channel bandwidth. A latter case may include a case of defining a PBCH transmission/reception bandwidth as the PDCCH transmission/reception bandwidth.

In the scenario to which the conventional CORESET #0 reusing scheme is applied, the base station may perform PDCCH RE mapping according to an existing prescribed procedure for the entire CORESET#0 bandwidth. The base station may transmit all the PDCCH transmission REs. Alternatively, the base station may transmit (all or some) PDCCH transmission REs included in the PDCCH transmission/reception bandwidth in units of REs/RBs/REGs/REG bundles/CCEs. In the present disclosure, "transmission of PDCCH transmission REs" may mean "PDCCH transmission in REs for PDCCH transmission".

At a receiver, the UE may expect to receive the PDCCH transmitted by the base station in the scheme only for (all or some) PDCCH transmission REs/RBs/REGs/REG bundles/CCEs included in the PDCCH transmission/reception bandwidth. Alternatively, the UE may be required to perform the corresponding receiving operation.

That is, upon receiving the PDCCH, reception by the UE may not be expected/required for PDCCH transmission REs/RBs/REGs/REG bundles/CCEs which the base station RE maps out of the PDCCH transmission/reception bandwidth (regardless of whether actual transmission is performed).

When the base station/UE that transmits/receives the PDCCH in the scheme determines/indicates a common PUCCH transmission resource by applying Method #5, the base station/UE may determine/indicate $N_{CCE}$ and $n_{CCE,0}$ based on the PDCCH transmission/reception bandwidth. That is, based on the PDCCH transmission/reception bandwidth rather than the entire CORESET#0 bandwidth, $N_{CCE}$ may be determined, and CCE indexes may be generated/determined based on $N_{CCE}$. $n_{CCE,0}$ may be determined based on the PDCCH CCE frequency location at which the DCI is received. In this case, $n_{CCE,0}$ corresponding to the received DCI may be a first CCE index of the PDCCH actually transmitted/received (i.e., after application of puncturing/truncation) among the CCE indexes generated/determined in the PDCCH transmission/reception bandwidth.

[Example #1 in Method #5] It may be assumed that the channel bandwidth 15 PRBs, and CORESET#0 is 24 PRBs and 3 symbols in [Example #1] of the conventional CORESET#0 reusing scheme. When Method #5 is applied in order to determine the common PUCCH transmission resource, $N_{CCE}$ may be determined as 6 (= 2 * 3), and $n_{CCE,0}$ may be determined as one of values from 0 to 5 according to the PDCCH CCE frequency location at which the DCI is received. Alternatively, when the CCE indexes are generated/determined by allowing a case where the PDCCH is partially transmitted in a same scenario, $N_{CCE}$ may be determined as 9 (= 3 * 3), and $n_{CCE,0}$ may be determined as one of values from 0 to 8 according to the PDCCH CCE frequency location at which the DCI is received.

[Example #2 in Method #5] For example, a scenario that supports a partial bandwidth in a 5-MHz channel bandwidth for NR may be assumed. Specifically, in a scenario in which an NR-supported bandwidth is 20 PRBs, a case in which the CORESET #0 is 24 PRBs and 3 symbols may be assumed. When Method #5 is applied in order to determine the common PUCCH transmission resource, $N_{CCE}$ may be determined as 9 (= 3 * 3), and $n_{CCE,0}$ may be determined as one of values from 0 to 8 according to the PDCCH CCE frequency location at which the DCI is received. Alternatively, when the CCE indexes are generated/determined by allowing a case where the PDCCH is partially transmitted in a same scenario, $N_{CCE}$ may be determined as 12 (= 4 * 3), and $n_{CCE,0}$ may be determined as one of values from 0 to 11 according to the PDCCH CCE frequency location at which the DCI is received.

[Method #6]

A method for determining $N_{CCE}$ and $n_{CCE,0}$ based on the CORESET#0 bandwidth may be considered.

As exemplified in the scenario to which the conventional CORESET#0 reusing scheme is applied, when the entire CORESET#0 bandwidth is not used for PDCCH transmission/reception, $N_{CCE}$ and $n_{CCE,0}$ may be determined/indicated based on the CORESET#0 bandwidth.

In the scenario to which the conventional CORESET#0 reusing scheme is applied, the base station may perform PDCCH RE mapping according to an existing prescribed procedure for the entire CORESET#0 bandwidth. The base station may transmit all the PDCCH transmission REs. Alternatively, the base station may transmit (all or some) PDCCH transmission REs included in the PDCCH transmission/reception bandwidth in units of REs/RBs/REGs/REG bundles/CCEs. In the present disclosure, "transmission of PDCCH transmission REs" may mean "PDCCH transmission in REs for PDCCH transmission".

At a receiver, the UE may expect to receive the PDCCH transmitted by the base station in the scheme only for (all or some) PDCCH transmission REs/RBs/REGs/REG bundles/CCEs included in the PDCCH transmission/reception bandwidth. Alternatively, the UE may be required to perform the corresponding receiving operation.

That is, upon receiving the PDCCH, reception by the UE may not be expected/required for PDCCH transmission REs/RBs/REGs/REG bundles/CCEs which the base station RE maps out of the PDCCH transmission/reception bandwidth (regardless of whether actual transmission is performed).

When the base station/UE that transmits/receives the PDCCH in the scheme determines/indicates the common PUCCH transmission resource by applying Method #6, $N_{CCE}$ and $n_{CCE,0}$ may be determined/indicated as follows. By assuming that the PDCCH is continuously transmitted/received in the entire CORESET#0 bandwidth, $N_{CCE}$ and $n_{CCE,0}$ may be determined/indicated. That is, based on the entire CORESET#0 bandwidth rather than the PDCCH transmission/reception bandwidth, $N_{CCE}$ may be determined, and CCE indexes may be generated/determined based on $N_{CCE}$. $n_{CCE,0}$ may be determined based on the PDCCH CCE frequency location at which the DCI is received. In this case, $n_{CCE,0}$ corresponding to the received DCI may be i) a first CCE index of the PDCCH actually transmitted/received (i.e., after application of puncturing/truncation) in the PDCCH transmission/reception bandwidth or ii) a first CCE index of the PDCCH (i.e., before application of puncturing/truncation) in terms of PDCCH RE mapping.

[Example #1 in Method #6] It may be assumed that the channel bandwidth 15 PRBs, and CORESET#0 is 24 PRBs and 3 symbols in [Example #1] of the conventional CORESET#0 reusing scheme. When Method #6 is applied in order to determine the common PUCCH transmission resource, $N_{CCE}$ may be determined as 12 (= 4 * 3), and $n_{CCE,0}$ may be determined as one of values from 0 to 11 according to the PDCCH CCE frequency location at which the DCI is received.

[Example #2 in Method #6] For example, a scenario that supports a partial bandwidth in a 5-MHz channel bandwidth for NR may be assumed. Specifically, in a scenario in which an NR-supported bandwidth is 20 PRBs, a case in which the CORESET#0 is 24 PRBs and 3 symbols may be assumed. When Method #6 is applied in order to determine the common PUCCH transmission resource, $N_{CCE}$ may be determined as 12 (= 4 * 3), and $n_{CCE,0}$ may be determined as one of values from 0 to 11 according to the PDCCH CCE frequency location at which the DCI is received.

[Method #7]

A method for determining $N_{CCE}$ based on the CORESET#0 bandwidth and determining $n_{CCE,0}$ based on the PDCCH transmission/reception bandwidth may be considered.

In addition, in addition to Method #5 and Method #6 above, when the entire CORESET#0 bandwidth is not used for PDCCH transmission/reception, $N_{CCE}$ and $n_{CCE,0}$ may be determined/indicated as follows.

The base station/UE may determine $N_{CCE}$ based on the CORESET#0 bandwidth. In addition, the base station/UE may determine $n_{CCE,0}$ based on the PDCCH transmission/reception bandwidth.

In the scenario to which the conventional CORESET#0 reusing scheme is applied, the base station may perform PDCCH RE mapping according to an existing prescribed procedure for the entire CORESET#0 bandwidth. The base station may transmit all the PDCCH transmission REs. Alternatively, the base station may transmit (all or some) PDCCH transmission REs included in the PDCCH transmission/reception bandwidth in units of REs/RBs/REGs/REG bundles/CCEs.

At a receiver, the UE may expect to receive the PDCCH transmitted by the base station in the scheme only for (all or some) PDCCH transmission REs/RBs/REGs/REG bundles/CCEs included in the PDCCH transmission/reception bandwidth. Alternatively, the UE may be required to perform the corresponding receiving operation.

That is, upon receiving the PDCCH, reception by the UE may not be expected/required for PDCCH transmission REs/RBs/REGs/REG bundles/CCEs which the base station RE maps out of the PDCCH transmission/reception bandwidth (regardless of whether actual transmission is performed).

When the base station/UE that transmits/receives the PDCCH in the scheme determines the common PUCCH transmission resource by applying Method #7, $N_{CCE}$ and $n_{CCE,0}$ may be determined/indicated as follows. By assuming that the PDCCH is continuously transmitted/received in the entire CORESET#0 bandwidth, $N_{CCE}$ may be determined/indicated. That is, $N_{CCE}$ may be determined/indicated based on the entire CORESET#0 bandwidth rather than the PDCCH transmission/reception bandwidth. Meanwhile, CCE indexes may be generated/determined based on the PDCCH transmission/reception bandwidth. In this case, when a total number of CCEs calculated based on the PDCCH transmission/reception bandwidth is $N'_{CCE}$ ($\leq N_{CCE}$), the CCE index may have values of 0 to $N'_{CCE}$ - 1. Based on the generated CCE indexes, $n_{CCE,0}$ may be determined based on the PDCCH CCE frequency location at which the DCI is received. In this case, $n_{CCE,0}$ corresponding to the received DCI may be a first CCE index of the PDCCH actually transmitted/received (i.e., after application of puncturing/truncation) in the PDCCH transmission/reception bandwidth.

[Example #1 in Method #7] It may be assumed that the channel bandwidth 15 PRBs, and CORESET#0 is 24 PRBs and 3 symbols in [Example #1] of the conventional CORFSET#0 reusing scheme. When Method #7 is applied in order to determine the common PUCCH transmission resource, $N_{CCE}$ may be determined as 12 (= 4 * 3), $N'_{CCE}$ may be determined as 6 (= 2 * 3), and $n_{CCE,0}$ may be one of values from 0 to 5 according to the PDCCH CCE frequency location at which the DCI is received.

[Example #2 in Method #7] For example, a scenario that supports a partial bandwidth in a 5-MHz channel bandwidth for NR may be assumed. Specifically, in a scenario in which an NR-supported bandwidth is 20 PRBs, a case in which the CORESET#0 is 24 PRBs and 3 symbols may be assumed. When Method #7 is applied in order to determine the common PUCCH transmission resource, $N_{CCE}$ may be determined as 12 (= 4 * 3), $N'_{CCE}$ may be determined as 9 (= 3 * 3), and $n_{CCE,0}$ may be one of values from 0 to 8 according to the PDCCH CCE frequency location at which the DCI is received.

Overall base station/UE operation flows to which the methods are applied may be as follows.

[1] The base station determines one of the above-described methods (Methods #1 to #7). The base station transmits the PUCCH resource based on the determined method and/or information related to a PUCCH resource determination scheme through broadcast signaling.

[2] The UE determines the PUCCH transmission resource in a method which is the same as the determination method by the base station by referring to the information received through the broadcast signaling and other information.

[3] The UE transmits the PUCCH based on the determined PUCCH transmission resource. The base station determines a PUCCH resource of a target UE based on the method configured/indicated through the broadcasting signaling (PUCCH resource determination method), and receives a PUCCH on the corresponding PUCCH resource.

As described above with reference to Tables 11 and 12, The methods (Method #5 to Method #7) are not limited to common PUCCH transmission, but may also be equally applied to dedicated PUCCH transmission after receiving a dedicated PUCCH resource configuration. Further, in the methods, CORESET#0 may be interchanged, and interpreted/applied as other general CORESETs, i.e., CORESET#p (p is 1, 2, etc.).

Therefore, even in the dedicated PUCCH transmission, when the number of PUCCH resources in the PUCCH resource set exceeds 8, the PUCCH transmission resource may be determined by applying a method similar to that in the common PUCCH transmission.

As an example, in order to enhance a network flexibility, a method preferred by the base station among the above-described methods (method #1 to method #7) may be selected/applied.

As an example, the base station may transmit information for about a configuration or an indication related to at least one of the above-described methods (Method #1 to Method #7) to the UE based on at least one of broadcast signaling, dedicated RRC signaling, a MAC CE, and/or DCI.

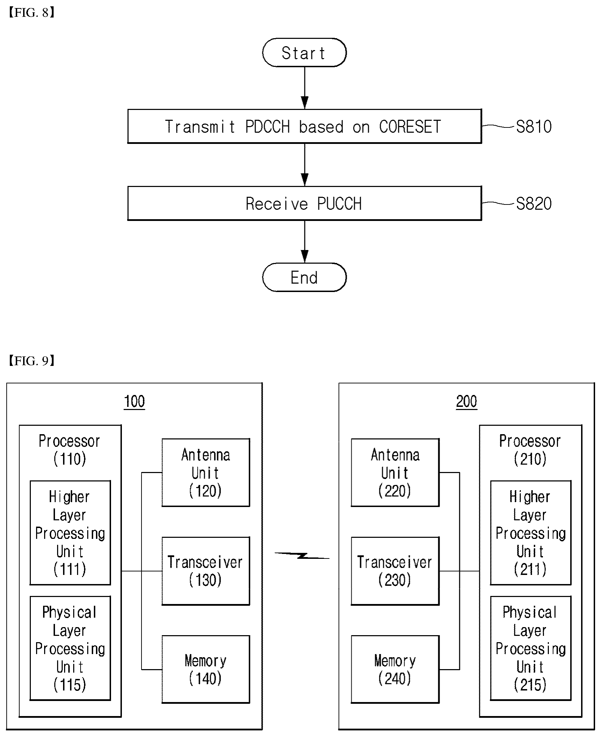

In terms of implementation, the operations (e.g., operations based on at least one of Methods #1 to #7) of the base station/UE according to the above-described embodiments may be processed by devices (e.g., processors 110 and 210 in FIG. 9) in FIG. 9 to be described below.

Further, the operations (e.g., operations based on at least one of Methods #1 to #7) of the base station/UE according to the above-described embodiment may be stored in memories (e.g., 140 and 240 in FIG. 9) in the form of an instruction/program (e.g., instruction or executable code) for driving at least one processor (e.g., 110 and 210 in FIG. 9).

Hereinafter, the embodiments described above will be described in detail with reference to FIGS. 7 and 8 in terms of the operations of the UE and the base station. Methods to be described are just distinguished for convenience and it is needless to say that some components of any one method may be substituted with some components of another method or may be applied in combination with each other.

FIG. 7 is a flowchart for describing a method performed by a user equipment (UE) according to an embodiment of the present disclosure.

Referring to FIG. 7, a method performed by a UE in a wireless communication system according to an embodiment of the present disclosure includes a step of a PDCCH based a CORESET (S710) and a step of transmitting a PUCCH (S720).

In S710, the UE receives, from the base station, a Physical Downlink Control CHannel (PDCCH) based on a COntrol REsource SET (CORESET).

The CORESET is obtained based on puncturing of highest-numbered resource blocks among resource blocks based on a frequency domain size of the CORESET. That is, the puncturing may be performed when a channel bandwidth supported by the UE is a narrowband. For example, the puncturing may be performed based on Table 8. As a specific example, among 24 resource blocks, remaining 9 resource blocks other than 15 resource blocks based on a channel bandwidth may be punctured. The 9 resource blocks may be determined in descending order of RB indexes. In other words, the 9 resource blocks may include 9 resource blocks selected from a highest RB index.

Downlink Control Information (DCI) related to the PDCCH may include a PUCCH Resource Indicator (PRI) field. As an example, a number of bits of the PRI field may be 3. In this case, one of eight PUCCH resources may be indicated by the PRI field. However, when the number of PUCCH resources in a PUCCH resource set exceeds 8 (e.g., 16, 32, etc.), the PUCCH resource may not be determined only by the PRI field. In such a case, the PUCCH resource may be determined based on the number of CCEs and a CCE index (Table 10 or 12). More details will be described below.

According to an embodiment, the number of the resource blocks based on the channel bandwidth may be smaller than the number of resource blocks based on a frequency domain size of the CORESET. As an example, a channel bandwidth related to the CORESET may be smaller than 5 MHz.

According to an embodiment, the CORESET may be one of i) a first CORESET or ii) one of second CORESETs configured separately from the first CORESET. The first CORESET may be configured based on a Master Information Block (MIB). That is, the first CORESET may be CORESET#0 described above. The second CORESET may be CORESET#p described above.

In S720, the UE transmits a Physical Uplink Control CHannel (PUCCH) based on a PUCCH resource.

According to an embodiment, the PUCCH resource may be determined based on i) a value of the PRI field (e.g., $\Delta_{PRI}$), ii) a number of Control Channel Elements (CCEs) in the CORESET (e.g., $N_{CCE}$ or $N_{CCE,p}$), and iii) an index of a first CCE for receiving the PDCCH among the CCEs (e.g., $n_{CCE,0}$ or $n_{CCE,p}$). The embodiment may be based on at least one of Method #1 to Method #7.

As an example, the CCEs in the CORESET may be obtained prior to the puncturing. The embodiment may be based on Method #1.

As an example, the PUCCH resource may be a common PUCCH resource or a dedicated PUCCH resource. Specifically, the PUCCH resource may be based on i) a common configuration or ii) a dedicated configuration.

According to an embodiment, the method may further include a step of a common configuration. Specifically, the UE may receive the common configuration from the base station.

As an example, the common configuration (e.g., PUCCH-ConfigCommon) may be received based on broadcast signaling (e.g., Broadcast Control Channel (BCCH)). More specifically, the common configuration may be received based on a System Information Block (SIB) (e.g., SIB1). That is, the SIB includes the common configuration (e.g., SIB1 -> UplinkConfigCommon -> initialUplinkBWP (BWP-UplinkCommon) -> pucch-ConfigCommon).

As an example, the common configuration may include information for an index related to one of PUCCH resource sets (e.g., pucch-ResourceCommon).

That is, referring to Table 9, the PUCCH resource sets may be PUCCH resource sets before a dedicated PUCCH resource configuration. The index may be one of 0 to 15. The PUCCH resource may one of 16 PUCCH resources within a PUCCH resource set based on the index. The PUCCH resource set/PUCCH resource based on the index may be used until the dedicated configuration is received.

According to an embodiment, the method may further include a step of receiving a dedicated configuration. Specifically, the UE receives the dedicated configuration from the base station. The dedicated configuration (e.g., PUCCH-config) may include information (e.g., resourceSetToAddModList) for one or more PUCCH resource sets (e.g., a maximum of 4 PUCCH resource sets). In this case, a PUCCH resource set may be determined among the one or more PUCCH resource sets based on a number of bits related to Uplink Control Information (UCI) (see Table 11). The number of bits relates to the UCI may mean $O_{UCI}$ of Table 11.

As an example, the PUCCH resource may be one of PUCCH resources within the determined PUCCH resource set. The number of PUCCH resources may be larger than 8 (e.g., Table 12).

The operations based on S710 and S720, the common configuration receiving step, and the dedicated configuration receiving step described above may be implemented by devices in FIG. 9. For example, a UE 200 may control one or more transceivers 230 and/or one or more memories 240 to perform the operations based on S710 and S720, the common configuration receiving step, and the dedicated configuration receiving step.

Hereinafter, the embodiments described above will be specifically described in terms of the operation of the base station.

S810 and S820, a configuration information transmitting step, and a dedicated configuration transmitting step described below correspond to S710 and S720, the configuration information receiving step, and the dedicated configuration receiving step described in FIG. 7. By considering the correspondence relationship, redundant descriptions are omitted. That is, a specific description of base station operations described below may be replaced with the description/embodiment of FIG. 7 corresponding to the corresponding operation.

FIG. 8 is a flowchart for describing a method performed by a base station according to another embodiment of the present disclosure.

Referring to FIG. 8, a method performed by a base station according to another embodiment of the present disclosure includes a step of a PDCCH based a CORESET (S810) and a step of receiving a PUCCH (S820).

In S810, the base station transmits, to the UE, a Physical Downlink Control CHannel (PDCCH) based on a COntrol REsource SET (CORESET).

The CORESET is obtained based on puncturing of highest-numbered resource blocks among resource blocks based on a frequency domain size of the CORESET. That is, the puncturing may be performed when a channel bandwidth supported by the UE is a narrowband. For example, the puncturing may be performed based on Table 9.

Downlink Control Information (DCI) related to the PDCCH may include a PUCCH Resource Indicator (PRI) field.

In S820, the base station receives, from the UE, a Physical Uplink Control CHannel (PUCCH) based on a PUCCH resource.

According to an embodiment, the method may further include a step of transmitting a common configuration. Specifically, the base station transmits the common configuration to the UE.

According to an embodiment, the method may further include a step of transmitting a dedicated configuration. Specifically, the base station transmits the dedicated configuration to the UE.

The operations based on S810 and S820, the common configuration transmitting step, and the dedicated configuration transmitting step described above may be implemented by the devices in FIG. 9. For example, a base station 100 may control one or more transceivers 130 and/or one or more memories 140 to perform the operations based on S810 and S820, the common configuration transmitting step, and the dedicated configuration transmitting step.

A device to which an embodiment of the present disclosure is applicable (a device implementing the method/operation according to an embodiment of the present disclosure) is described below with reference to FIG. 9.

FIG. 9 illustrates configuration of a first device and a second device according to an embodiment of the present disclosure.

A first device 100 may include a processor 110, an antenna unit 120, a transceiver 130, and a memory 140.

The processor 110 may perform baseband-related signal processing and include a higher layer processing unit 111 and a physical layer processing unit 115. The higher layer processing unit 111 may process operations of the MAC layer, the RRC layer, or higher layers. The physical layer processing unit 115 may process the operation of the PHY layer. For example, if the first device 100 is a base station (BS) device in BS-UE communication, the physical layer processing unit 115 may perform uplink reception signal processing, downlink transmission signal processing, and the like. For example, if the first device 100 is a first UE device in inter-UE communication, the physical layer processing unit 115 may performs downlink reception signal processing, uplink transmission signal processing, sidelink transmission signal processing, and the like. The processor 110 may control the overall operation of the first device 100 in addition to performing the baseband-related signal processing.

The antenna unit 120 may include one or more physical antennas and support MIMO transmission/reception if the antenna unit 120 includes a plurality of antennas. The transceiver 130 may include a radio frequency (RF) transmitter and an RF receiver. The memory 140 may store information processed by the processor 110 and software, operating systems, and applications related to the operation of the first device 100. The memory 140 may also include components such as a buffer.

The processor 110 of the first device 100 may be configured to implement the operation of the BS in the BS-UE communication (or the operation of the first UE device in the inter-UE communication) in embodiments described in the present disclosure.

The second device 200 may include a processor 210, an antenna unit 220, a transceiver 230, and a memory 240.

The processor 210 may perform baseband-related signal processing and include a higher layer processing unit 211 and a physical layer processing unit 215. The higher layer processing unit 211 may process the operation of the MAC layer, the RRC layer, or higher layers. The physical layer processing unit 215 may process the operation of the PHY layer. For example, if the second device 200 is a UE device in BS-UE communication, the physical layer processing unit 215 may perform downlink reception signal processing, uplink transmission signal processing, and the like. For example, if the second device 200 is a second UE device in inter-UE communication, the physical layer processing unit 215 may perform downlink reception signal processing, uplink transmission signal processing, sidelink reception signal processing, and the like. The processor 210 may control the overall operation of the second device 210 in addition to performing the baseband-related signal processing.

The antenna unit 220 may include one or more physical antennas and support MIMO transmission/reception if the antenna unit 220 includes a plurality of antennas. The transceiver 230 may include an RF transmitter and an RF receiver. The memory 240 may store information processed by the processor 210 and software, operating systems, and applications related to the operation of the second device 200. The memory 240 may also include components such as a buffer.

The processor 210 of the second device 200 may be configured to implement the operation of the UE in the BS-UE communication (or the operation of the second UE device in the inter-UE communication) in embodiments described in the present disclosure.

The descriptions for the BS and the UE in the BS-UE communication (or the first UE device and the second UE device in the inter-UE communication) in the examples of the present disclosure can be equally applied to the operations of the first device 100 and the second device 200, and redundant descriptions are omitted.

The wireless communication technology implemented in the devices 100 and 200 according to the present disclosure may further include narrowband Internet of Things (NB-IoT) for low-power communication in addition to LTE, NR, and 6G. For example, the NB-IoT technology may be an example of a low power wide area network (LPWAN) technology and may be implemented in standards such as LTE Cat NB1 and/or LTE Cat NB2. The NB-IoT technology is not limited to the above-described names.

Additionally or alternatively, the wireless communication technology implemented in the devices 100 and 200 according to the present disclosure may perform communication based on LTE-M technology. For example, the LTE-M technology may be an example of the LPWAN technology, and may be called by various names such as enhanced machine type communication (eMTC). For example, the LTE-M technology may be implemented with at least one of various standards such as 1) LTE CAT 0, 2) LTE Cat M1, 3) LTE Cat M2, 4) LTE non-BL (non-Bandwidth Limited), 5) LTE-MTC, 6) LTE machine type communication, and/or 7) LTE M. The LTE-M technology is not limited to the above-mentioned names.

Additionally or alternatively, the wireless communication technology implemented in the devices 100 and 200 according to the present disclosure may include at least one of ZigBee, Bluetooth, and low power wide area network (LPWAN) in consideration of low power communication, and is not limited to the above-mentioned names. For example, the ZigBee technology may create personal area networks (PAN) related to small/low-power digital communication based on various standards such as IEEE 802.15.4, and may be called by various names.

**Claims**

1. A method performed by a user equipment (UE) in a wireless communication system, the method comprising:

   receiving a Physical Downlink Control Channel (PDCCH) based on a COntrol REsource SET (CORESET), wherein the CORESET is obtained based on puncturing highest-numbered resource blocks among resource blocks based on a frequency domain size of the CORESET,
   wherein downlink control information (DCI) related to the PDCCH includes a PUCCH Resource Indicator (PRI) field; and
   transmitting a Physical Uplink Control Channel (PUCCH) based on a PUCCH resource,
   wherein the PUCCH resource is determined based on i) a value of the PRI field, ii) a number of Control Channel Elements (CCEs) in the CORESET and iii) an index of a first CCE for the reception of the PDCCH among the CCEs,
   wherein the CCEs in the CORESET are obtained prior to the puncturing.

2. The method of claim 1, wherein the PUCCH resource is based on i) a common configuration or ii) a dedicated configuration.

3. The method of claim 2, further comprising:

   receiving the common configuration,
   wherein the common configuration includes information for an index related to one of PUCCH resource sets.

4. The method of claim 3, wherein the PUCCH resource is one of 16 PUCCH resources within a PUCCH resource set based on the index.

5. The method of claim 2, further comprising:

   receiving the dedicated configuration,
   wherein the dedicated configuration includes information for one or more PUCCH resource sets.

6. The method of claim 5, wherein a PUCCH resource set is determined among the one or more PUCCH resource sets based on a number of bits related to Uplink Control Information (UCI).

7. The method of claim 6, wherein the PUCCH resource is one of PUCCH resources within the determined PUCCH resource set.

8. The method of claim 7, wherein the number of PUCCH resources is larger than 8.

9. The method of claim 1, wherein a channel bandwidth related to the CORESET is smaller than 5 MHz.

10. The method of claim 9, wherein the CORESET is i) a first CORESET or ii) one of second CORESETs configured separately from the first CORESET, and
    wherein the first CORESET is configured based on a Master Information Block (MIB).

11. A user equipment operating in a wireless communication system, the user equipment comprising:

one or more transceivers;
one or more processors; and
one or more memories connected to the one or more processors and storing instructions,
wherein the instructions configure the one or more processors to perform all steps of a method according to any one of claims 1 to 10 based on being executed by the one or more processors.

12. A device comprising:

one or more memories; and
one or more processors operably connected to the one or more memories,
wherein the one or more memories store instructions that configure the one or more processors to perform all steps of a method according to any one of claims 1 to 10 based on being executed by the one or more processors.

13. One or more non-transitory computer readable mediums storing instructions,
wherein the instructions executable by one or more processors configure the one or more processors to perform all steps of a method according to any one of claims 1 to 10.

14. A method performed by a base station in a wireless communication system, the method comprising:

transmitting a Physical Downlink Control Channel (PDCCH) based on a COntrol REsource SET (CORESET),
wherein the CORESET is obtained based on puncturing highest-numbered resource blocks among resource blocks based on a frequency domain size of the CORESET,
wherein downlink control information (DCI) related to the PDCCH includes a PUCCH Resource Indicator (PRI) field; and
receiving a Physical Uplink Control Channel (PUCCH) based on a PUCCH resource,
wherein the PUCCH resource is determined based on i) a value of the PRI field, ii) a number of Control Channel Elements (CCEs) in the CORESET and iii) an index of a first CCE for the reception of the PDCCH among the CCEs,
wherein the CCEs in the CORESET are obtained prior to the puncturing.

15. A base station operating in a wireless communication system, the base station comprising:

one or more transceivers;
one or more processors; and
one or more memories connected to the one or more processors and storing instructions,
wherein the instructions configure the one or more processors to perform all steps of a method according to claim 14 based on being executed by the one or more processors.

[FIG. 1]

Radio Frame 10ms

Subframe 1ms

Fixed Size

| 0 | 1 | 2 | 3 | 4 | 5 | 6 | 7 | 8 | 9 |

Subframe ={1,2,4} Slots

Slot

| 0 | 1 | 2 | 3 |

Slot={7,14} Symbols

Symbol

Size depends on subcarrier spacing

| 0 | 1 | 2 | 3 | 4 | 5 | 6 | 7 | 8 | 9 | 10 | 11 | 12 | 13 |

Mini-Slot (URLLC)

Mini-Slot={2,4,7} Symbols

【FIG. 2】

1 subframe =
$14 \cdot 2^{\mu}$ OFDM symbols

$k = N_{grid}^{size,\mu} N_{sc}^{RB} - 1$

Resource element(k,l)

$N_{grid}^{size,\mu} N_{sc}^{RB}$ subcarriers

1 resource block = $N_{sc}^{RB}$ subcarriers

$k = 0$

$l = 0$

$l = 14 \cdot 2^{\mu} - 1$

【FIG. 3】

INITIAL CELL SEARCH | SYSTEM INFORMATION RECEPTION | RANDOM ACCESS PROCEDURE | GENERAL DL/UL Tx/Rx

PSS/SSS& [DLRS]& PBCH — S301

PDCCH/ PDSCH (BCCH) — S302

PRACH — S303 | PDCCH/ PDSCH — S304 | PUSCH — S305 | PDCCH/ PDSCH — S306

PDCCH/ PDSCH — S307 | PUSCH/ PUCCH — S308

· DL/UL ACK/NACK
· UE CQI/PMI RI REPORT USING PUSCH AND PUCCH

【FIG. 4】

Subcarrier Number

239
192
182
56
47
0

OFDM symbol number: 0  1  2  3

Column 0: PSS
Column 1: PBCH
Column 2: PBCH / SSS / PBCH
Column 3: PBCH

【FIG. 5】

SSB periodicity(default:20ms)

5ms window

SSB#1  SSB#2  · · ·  SSB#L

SSB burst set

【FIG. 6】

【FIG. 7】

【FIG. 8】

```
            ┌─────────┐
            │  Start  │
            └─────────┘
                 │
                 ▼
  ┌──────────────────────────────────┐
  │ Transmit PDCCH based on CORESET  │──S810
  └──────────────────────────────────┘
                 │
                 ▼
  ┌──────────────────────────────────┐
  │         Receive PUCCH            │──S820
  └──────────────────────────────────┘
                 │
                 ▼
            ┌─────────┐
            │   End   │
            └─────────┘
```

【FIG. 9】

## INTERNATIONAL SEARCH REPORT

| | International application No. |
|---|---|
| | **PCT/KR2024/095322** |

| A. | CLASSIFICATION OF SUBJECT MATTER |
|---|---|
| | **H04W 72/21**(2023.01)i; **H04W 72/04**(2009.01)i; **H04W 72/541**(2023.01)i; **H04W 48/10**(2009.01)i; **H04W 48/12**(2009.01)i; **H04L 5/00**(2006.01)i |

According to International Patent Classification (IPC) or to both national classification and IPC

| B. | FIELDS SEARCHED |
|---|---|

Minimum documentation searched (classification system followed by classification symbols)

H04W 72/21(2023.01); H04L 1/18(2006.01); H04W 72/04(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: CORESET, puncturing, number of CCEs, first CCE index, PUCCH resource, DCI, PUCCH resource indicator

| C. | DOCUMENTS CONSIDERED TO BE RELEVANT |
|---|---|

| Category* | Citation of document, with indication, where appropriate, of the relevant passages | Relevant to claim No. |
|---|---|---|
| A | US 2021-0391955 A1 (APPLE INC.) 16 December 2021 (2021-12-16) See paragraphs [0221]-[0234]; and figure 9. | 1-15 |
| A | US 2020-0236672 A1 (LG ELECTRONICS INC.) 23 July 2020 (2020-07-23) See paragraphs [0239]-[0248]; and figure 17. | 1-15 |
| A | LENOVO. Enhancements to operate NR on dedicated spectrum less than 5 MHz. R1-2211572, 3GPP TSG RAN WG1 Meeting #111. Toulouse, France. 07 November 2022. See section 2.2; and figure 2. | 1-15 |
| A | NOKIA et al. NR support for below 5 MHz BW. R1-2212397, 3GPP TSG RAN WG1 Meeting #111. Toulouse, France. 07 November 2022. See sections 4-4.2 and 5.2. | 1-15 |
| A | VIVO. Discussion on NR support for dedicated spectrum less than 5MHz. R1-2211036, 3GPP TSG RAN WG1 Meeting #111. Toulouse, France. 07 November 2022. See section 2; and figure 2. | 1-15 |

☐ Further documents are listed in the continuation of Box C.　　☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **04 June 2024** | **04 June 2024** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2024/095322**

| Patent document cited in search report | | | Publication date (day/month/year) | Patent family member(s) | | | Publication date (day/month/year) |
|---|---|---|---|---|---|---|---|
| US | 2021-0391955 | A1 | 16 December 2021 | WO | 2020-093016 | A1 | 07 May 2020 |
| US | 2020-0236672 | A1 | 23 July 2020 | CN | 111869289 | A | 30 October 2020 |
| | | | | CN | 111869289 | B | 22 March 2024 |
| | | | | EP | 3537818 | A1 | 11 September 2019 |
| | | | | EP | 3537818 | A4 | 18 December 2019 |
| | | | | JP | 2020-507224 | A | 05 March 2020 |
| | | | | KR | 10-2019-0086664 | A | 23 July 2019 |
| | | | | KR | 10-2020-0042025 | A | 22 April 2020 |
| | | | | KR | 10-2190418 | B1 | 11 December 2020 |
| | | | | US | 10708894 | B2 | 07 July 2020 |
| | | | | US | 10893515 | B2 | 12 January 2021 |
| | | | | US | 2019-0261356 | A1 | 22 August 2019 |
| | | | | WO | 2019-139436 | A1 | 18 July 2019 |

Form PCT/ISA/210 (patent family annex) (July 2022)